(19) Europäisches Patentamt
European Patent Office
Office européen des brevets

(11) **EP 2 637 315 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **12196582.6**

(22) Anmeldetag: **11.12.2012**

(51) Int Cl.:
*H04B 3/54* (2006.01)   *H04L 12/10* (2006.01)
*G06F 1/26* (2006.01)   *H02J 5/00* (2016.01)
*H02J 7/00* (2006.01)   *H02J 3/32* (2006.01)
*H02J 9/06* (2006.01)

(54) **Netzabschnitt eines Datenkommunikations- oder/und Übertragungsnetzwerks mit aufladbaren Energiespeicheranordnungen aufweisenden Netzstationen**

Network section of a data communication or/and transmission network with network stations comprising chargeable energy storage facilities

Section de réseau d'un réseau de transmission ou/et de communication de données avec postes de réseau présentant des dispositifs d'accumulation d'énergie rechargeables

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2012 DE 102012203437**

(43) Veröffentlichungstag der Anmeldung:
**11.09.2013 Patentblatt 2013/37**

(73) Patentinhaber: **Unitymedia BW GmbH
50933 Köln (DE)**

(72) Erfinder: **Neugebauer, Rudolf
71636 Ludwigsburg (DE)**

(74) Vertreter: **Weickmann & Weickmann PartmbB
Postfach 860 820
81635 München (DE)**

(56) Entgegenhaltungen:
**DE-A1-102009 052 157    US-A- 3 987 240
US-A1- 2010 016 034**

**Beschreibung**

Die Erfindung betrifft nach einem ersten Aspekt einen Netzabschnitt eines über einen geographischen Bereich ausgedehnten Datenkommunikations- oder/und Übertragungsnetzwerks, umfassend eine Mehrzahl von Netzstrecken (Netzwerkstrecken), über die Datenkommunikationssignale oder/und Übertragungssignale übertragbar sind, und gewünschtenfalls umfassend eine Mehrzahl von Netzknoten (Netzwerkknoten), die Datenkommunikationssignale oder/und Übertragungssignale von wenigstens einer Netzstrecke empfangen oder/und an wenigstens eine Netzstrecke weitergeben (beispielsweise paketvermitteln umfassend wenigstens eines von einem Routing und Forwarding) und ggf. an mehrere Netzstrecken verteilen; sowie umfassend eine Gruppe von Netzstationen (Netzwerkstationen), die über den geographischen Bereich verteilt sind und jeweils in einer zugeordneten Netzstrecke oder an einem zugeordneten Netzknoten angeordnet sind oder einen jeweiligen Netzknoten bilden, wobei die Netzstationen jeweils eine elektronische Funktionsanordnung aufweisen, die wenigstens eine sich auf die über das Netzwerk übertragenen Signale beziehende Funktion erfüllt; wobei die Netzstationen über eine von Netzstrecken oder/und von über vorzugsweise entlang der Netzstrecken verlaufende Stromversorgungsstrecken eines dem Netzabschnitt zugeordneten Stromversorgungsnetzes gebildete Energieversorgungsverbindung von wenigstens einer Einspeiserstation des Netzabschnitts her mit elektrischem Strom fernversorgbar sind, um elektrische Energie für den Betrieb der elektronischen Funktionsanordnung der jeweiligen Netzstation bereitzustellen.

Es kann sich beispielsweise um einen Netzabschnitt eines Koaxialkabelnetzwerkes, insbesondere eines breitbandigen Koaxialkabelnetzwerkes wie etwa eines hybriden Faser-Kabel-(HFC)-Netzwerks handeln, über das beispielsweise analoge oder/und digitale Fernsehsignale oder/und Radiosignale umfassende Übertragungssignale und bidirektionale Signale umfassende Datenkommunikationssignale übertragen werden, wobei auf Basis dieser bidirektionalen Signale eine Datenkommunikation nach wenigstens einem Datenkommunikationsstandard, etwa wenigstens einem von dem Internet-(IP)-Protokol, dem SNMP-Protokoll und dem DOCSIS-Protokoll bereitgestellt wird. Die Netzstationen können von sogenannten A-Verstärkern oder/und sogenannten B-Verstärkern oder/und sogenannten A/B-Verstärkern oder/und sogenannten C-Verstärkern der Netzebenen 2 und 3, insbesondere der Netzebene 3, des Koaxialkabelnetzwerkes gebildet sein, oder jeweils einen solchen Verstärker umfassen. In solch einem Netzwerk erfolgt die Stromversorgung der angesprochenen Netzstationen über das jeweilige Netzwerkstrecken bildende Koaxialkabel, sodass zusätzliche Stromversorgungsstrecken eines dem Netzabschnitt zugeordneten Stromversorgungsnetzes nicht oder zumindest normalerweise nicht vorgesehen sind.

Der angesprochene Netzabschnitt kann aber auch zusätzlich oder alternativ Netzstrecken in Form von optische Signale übertragenden Faserstrecken umfassen, mit entsprechend hierfür ausgelegten Netzstationen. In solch einem Fall macht es durchaus Sinn, die entsprechenden Netzstationen über entlang den Faser-Netzstrecken verlaufende Stromversorgungsstrecken eines dem Netzabschnitt zugeordneten Stromversorgungsnetzes von einer zentraler Stelle, nämlich einer Einspeiserstation des Netzabschnittes, her mit elektrischem Strom fernzuversorgen.

Allgemein stellt sich für einen Betreiber eines solchen, gegebenenfalls ein vollständiges Datenkommunikations- oder/und Übertragungsnetzwerk meinenden Netzabschnitts die Aufgabe, die Netzverfügbarkeit zu erhalten oder gar zu erhöhen. Es ist für eine sichere und stabile Energieversorgung der Netzstationen, etwa Streckenverstärkern des Koaxialkabelnetzwerkes, zu sorgen. Diese Aufgabe stellt sich um so mehr, soweit die Einspeiserstation bzw. Einspeiserstationen aus dem öffentlichen Stromnetz mit elektrischer Energie versorgt werden, in dem Unterbrechungen der Stromversorgung in der Tat auftreten und herkömmlich Dienstunterbrechungen für den Netzabschnitt zur Folge haben, für die der Betreiber des Netzabschnitts keine Verantwortung hat.

Es würde sich anbieten, die Einspeiserstation bzw. die Einspeiserstationen mit Notstromaggregaten oder aus dem Stromversorgungsnetz aufladbaren Energiespeicheranordnungen zum Speichern von elektrischer Energie auszustatten, sodass im Falle eines Stromausfalls im öffentlichen Netz die von der Einspeiserstation mit elektrischem Strom fernversorgten Netzstationen auf Basis von in der Energiespeicheranordnung gespeicherter elektrischer Energie mit elektrischer Energie versorgt werden und so Dienstunterbrechungen in Folge von Stromausfällen vermieden werden. Dies hätte den Vorteil, dass bisherige herkömmliche Datenkommunikations- oder/und Übertragungsnetzwerke nur an einer oder einigen, vergleichsweise wenigen Stellen, nämlich den Einspeiserstationen, modifiziert werden müssten, um die Netzverfügbarkeit zu erhalten oder sogar zu erhöhen. Im Übrigen könnte die bestehende Infrastruktur unverändert weiter verwendet werden.

Es ist bekannt, dass anstelle einer zentralen, für die Versorgung mehrerer zugeordneter Netzstationen dienende aufladbare Energiespeicheranordnung betreffende Netzstationen jeweils mit einer eigenen aufladbaren Energiespeicheranordnung ausgestattet sind bzw. ausgestattet werden. Gemäß diesem bekannten Ansatz können die Netzstationen der Gruppe von Netzstationen oder zumindest mehrere Netzstationen einer Teilgruppe der Gruppe von Netzstationen jeweils die folgenden Merkmale aufweisen:

- die Netzstation ist mit einer aufladbaren Energiespeicheranordnung zur Speicherung von elektrischer Energie ausgestattet,

- die Energiespeicheranordnung ist durch eine zugeordnete Lade- und Entladeanordnung auf Basis des von der Einspeiserstation zugeführten elektrischen Stroms ($I_{NS}$) mit einem Ladestrom ladbar und ist durch die Lade- und Entladeanordnung entladbar,

- eine die Lade- und Entladeanordnung umfassende Stromversorgungsanordnung ist dafür ausgeführt, in einem ersten Betriebszustand die elektronische Funktionsanordnung auf Basis des von der Einspeiserstation zugeführten elektrischen Stroms ($I_{NS}$) mit elektrischer Energie zu versorgen und in einem zweiten Betriebszustand die elektronische Funktionsanordnung auf Basis von in der Energiespeicheranordnung gespeicherter elektrischer Energie mit elektrischer Energie zu versorgen,

- die Lade- und Entladeanordnung der Stromversorgungsanordnung ist zwischen mehreren Zuständen umschaltbar, umfassend einen Ladezustand, in dem die Energiespeicheranordnung geladen wird, einen Entladezustand, in dem die Energiespeicheranordnung entladen wird und einen Bereitschaftszustand, in dem die Energiespeicheranordnung nicht geladen und nicht entladen wird.

Diese Lösung bietet den Vorteil, dass für die lokale Backup-Stromversorgung einer einzelnen Netzstation in der Regel eine vergleichsweise kleine Energiespeicherkapazität ausreicht, die in der Regel problemlos innerhalb der vorhandenen Infrastruktur der jeweiligen Netzstation, beispielsweise in einem sogenannten "KVZ-Schrank" oder "Verstärkerpunkt-Gehäuse" im Falle des angesprochenen Koaxialkabelnetzes, untergebracht werden kann. Trotz der Notwendigkeit, in einem bestehenden, nach dem Lösungsansatz ggf. umzurüstenden Netzabschnitt alle entsprechenden Netzstationen mit einer aufladbaren Energiespeicheranordnung nachrüsten zu müssen, kann der insgesamt resultierende Aufwand, speziell der resultierende finanzielle Aufwand, kleiner sein als im Falle der sich in einer ersten Betrachtung eigentlich anbietenden Nachrüstung der Einspeiserstation bzw. Einspeiserstationen mit einer zentralen, mehrere Netzstationen zugeordneten aufladbaren Energiespeicheranordnung, da dort ein entsprechend größerer Speicherakkumulator oder Ähnliches als Energiespeicheranordnung verbaut werden müsste, wofür der Platz ohne erhebliche Umbaumaßnahmen, gegebenenfalls auch Tiefbaumaßnahmen, häufig oder regelmäßig nicht ausreichen wird.

Einen auf diesem bekannten Lösungsansatz beruhender Netzabschnitt gemäß dem Oberbegriff von Anspruch 1 ist aus der US 2010/016034 A1 bekannt.

Die DE 10 2009 052 157 A1 offenbart eine Spannungsversorgungsanordnung für ein Endgerät mit Ethernet-Energieversorgung und integriertem Energiespeicher. Der Energiespeicher wird aufgeladen in Phasen, in denen das Endgerät weniger Energie benötigt, als über das Ethernet-Kabel zugeführt wird. In Phasen, in denen das Endgerät mehr Energie benötigt, als über das Ethernet-Kabel zugeführt wird, stellt der Energiespeicher zusätzliche Energie zur Verfügung.

Ein Energieversorgungssystem für Koaxialkabelverstärker, bei dem die Koaxialkabelverstärker über das Koaxialkabel mit Energie versorgt werden und jeweils eine Speicherbatterie in ihren Energieversorgungseinheiten aufweisen, ist aus der US 3,987,240 bekannt.

Aufgabe der Erfindung ist, die Belastung der die Netzstationen versorgenden Einspeiserstation zu minimieren. Hierzu wird ein zeitlich aufeinander abgestimmtes Laden und Entladen der Energiespeicher der Netzstationen vorgesehen, wie im Kennzeichen von Anspruch 1 definiert. Ein entsprechendes Betriebsverfahren ist in Anspruch 12 angegeben.

Je nach Art der verwendeten aufladbaren Energiespeicheranordnung ist es zur Erhaltung der Speicherkapazität empfehlenswert, die Energiespeicheranordnung mehr oder weniger regelmäßig vollständig zu entladen und dann wieder zu laden. Dies gilt für die meisten in Frage kommenden elektrochemischen Energiespeicher, also Akkumulatoren der verschiedenen Typen. Es kommt dann im Prinzip in Betracht, die momentan in der Energiespeicheranordnung gespeicherte elektrische Energie mittels eines Stromflusses über eine Widerstandsanordnung zu entladen und damit in Wärme umzusetzen. Dies würde häufig aber zu einer unerwünschten Erwärmung in einem Gehäuse oder einem Schrank der betreffenden Netzstation führen. Es ist sehr sinnvoll, dass die Entladung durch Nutzung der gespeicherten elektrischen Energie für den Betrieb der elektronischen Funktionsanordnung erfolgt. Es wird hierzu vorgeschlagen, dass die Stromversorgungsanordnung dafür ausgeführt ist, die Energiespeicheranordnung nur im zweiten Betriebszustand zu entladen, so dass der Entladezustand (d.h. der Betriebszustand des Entladens) dem zweiten Betriebszustand entspricht, also der Entladevorgang nur in zweite Betriebszustand durchgeführt wird. Die Stromversorgungsanordnung wird somit nicht nur dann in den zweiten Betriebszustand geschaltet, wenn die Stromversorgung von der zugeordneten Einspeiserstation her unterbrochen ist, sondern auch in gewissen Abständen, gegebenenfalls periodisch, zur absichtlichen Entladung der Energiespeicheranordnung für ein erneutes Laden.

Ein gewisses "Restrisiko", dass gerade nach Entladung der Energiespeicheranordnung die Stromversorgung von der Einspeiserstation her unterbrochen werden könnte, muss in Kauf genommen werden. Dieses Restrisiko könnte aber dadurch ausgeschlossen werden, dass zwei aufladbare Energiespeicheranordnungen pro Netzstation vorgesehen werden, die alternierend zum Erhalt der Speicherkapazität entladen werden.

Gemäß einer bevorzugten Ausgestaltung des Netzabschnitts ist vorgesehen, dass die die Energiespeicheranordnungen aufweisenden Netzstationen von einer Fernsteuerzentrale aus fernsteuerbar sind, die jeweilige Lade- und Entladeanordnung für das Entladen der geladenen oder teilgeladenen Energiespeicheranordnung aus dem Bereitschaftszustand in den Entladezustand zu schalten oder/und die jeweilige Lade- und Entladeanordnung für das Laden der entladenen oder teilgeladenen Energiespeicheranordnung in den Ladezustand zu schalten. Es lässt sich so ein zeitlich und ggf. örtlich abgestimmtes Laden bzw. Entladen der Energiespeicher der Netzstationen realisieren, um die Belastung der Einspeiserstation entsprechend dem Erfindungsvorschlag zu minimieren und übermäßige Spannungsabfälle an einem jeweiligen Streckenwiderstand der Energieversorgungsverbindung zwischen der Einspeiserstation und einer jeweiligen Netzstation zu vermeiden. Letzteres könnte dazu führen, dass an einer jeweiligen Netzstation eine für den Betrieb der Funktionsanordnung nötige Minimalspannung unterschritten wird. Die Fernsteuerung kann zweckmäßig durch Kommunikation über das Netzwerk erfolgen.

Bevorzugt sind die Netzstationen jeweils mit einer elektronischen Steuereinheit ausgeführt, zur Steuerung von Funktionen der Netzstation, vorzugsweise einschließlich dem Schalten der Lade- und Entladeanordnung zwischen dem Ladezustand, dem Entladezustand und dem Bereitschaftszustand oder/und dem Schalten der Stromversorgungsanordnung zwischen dem ersten und dem zweiten Betriebszustand. Betreffend das vorzugsweise vorzusehende zeitlich und räumlich abgestimmte Entladen und Laden wird in diesem Zusammenhang vor allem daran gedacht, dass die elektronische Steuereinheit von der Fernsteuerzentrale fernkonfigurierbar oder/und betreffend die Umschaltung der Lade- und Entladeanordnung zwischen dem Ladezustand, dem Entladezustand und dem Bereitschaftszustand fernsteuerbar ist. Dabei kann man vorsehen, dass die elektronische Steuereinheit von der Fernsteuerzentrale fernkonfigurierbar ist, die Lade- und Entladeanordnung zwischen dem Ladezustand, dem Entladezustand und dem Bereitschaftszustand gemäß einem von der Fernsteuerzentrale vorgegebenen zeitlichen Ablaufplan umzuschalten. Es kommt insoweit durchaus in Betracht, durch Fernkonfiguration einen zeitlichen Ablaufplan für die Netzstationen vorzusehen, dem die Netzstationen dann folgen, ohne im weiteren zeitlichen Verlauf noch einer jeweiligen Fernsteuerung für die Umschaltung zwischen den angesprochenen Zuständen zu bedürfen. In der Regel wird es zur Sicherstellung und Überwachung des ordnungsgemäßen Funktionierens aber zweckmäßiger sein, wenn die einzelnen Lade- und Entladevorgänge direkt von der Fernsteuerzentrale her initiiert und überwacht werden.

Es soll noch die Möglichkeit erwähnt werden, dass das erfindungsgemäß vorzusehende zeitlich und ggf. räumlich abgestimmte Entladen und Laden ohne Fernsteuerung bzw. Fernkonfiguration von einer Fernsteuerzentrale her erfolgt, nämlich dann, wenn die elektronischen Steuereinheiten mit hinreichender "Intelligenz" dafür ausgestattet sind, die notwendige Abstimmung untereinander gewissermaßen "auszuhandeln". Hierzu könnten die Netzstationen über das Netzwerk miteinander kommunizieren. Eine hierfür notwendige Grundkonfiguration könnte im Zusammenhang mit der Installation bzw. Nachrüstung einer entsprechenden Netzstation erfolgen. Das Vorsehen einer Fernsteuerzentrale für das zeitlich und örtliche abgestimmte Entladen und Laden ist somit nur eine bevorzugte Ausgestaltung des erfindungsgemäßen Netzabschnitts.

Betreffend das angesprochene zeitlich abgestimmte Laden bzw. zeitlich abgestimmte Entladen und Laden ist gemäß Anspruch 1 erfindungsgemäß vorgesehen, dass die jeweils mit einer aufladbaren Energiespeicheranordnung ausgestatteten Netzstationen in Bezug auf das Umschalten ihrer jeweiligen Lade- und Entladeanordnung zwischen dem Ladezustand, dem Bereitschaftszustand und ggf. dem Entladezustand derart betreibbar oder dafür konfiguriert oder konfigurierbar sind, dass zu jedem Zeitpunkt die Summe aller Stromaufnahmen der von der Einspeiserstation fernversorgten Netzstationen in Form der den Netzstationen von der Einspeiserstationen zugeführten Ströme ($I_{NS}(i)$) umfassend einen Stromanteil ($I_{NS-B}(i)$) für den Betrieb der jeweiligen elektronische Funktionsanordnung und einen beim Laden der jeweiligen Energiespeicheranordnung zu diesem Stromanteil hinzukommenden Stromanteil ($I_{NS-L}(i)$) einen definierten Maximalwert $I_{Max}$ nicht übersteigt, wobei $I_{Max}$ kleiner ist als ein Strom, der der Summe aller den Netzstationen von der Einspeiserstation zugeführten Ströme ($I_{NS}(i) = I_{NS-B}(i) + (I_{NS-L}(i))$ im Falle eines gleichzeitigen Ladens aller Energiespeicheranordnungen entspricht. Eine erhöhte Stromaufnahme wenigstens einer Netzstation aufgrund des Ladens der jeweiligen Energiespeicheranordnung kann dabei durch Schalten der Stromversorgungsanordnung wenigstens einer anderen Netzstation in den zweiten Betriebszustand zumindest teilweise kompensiert werden. Es ist insoweit durchaus denkbar, dass der Maximalwert $I_{Max}$ im Wesentlichen der Summe aller Ströme entspricht, die die Einspeiserstation den Netzstationen zu den Zeitpunkten zuführt, in denen keine Energiespeicheranordnungen geladen werden.

Betreffend das angesprochene, bevorzugt vorzusehende örtlich abgestimmte Laden bzw. örtlich abgestimmte Entladen und Laden wird speziell daran gedacht, dass die jeweils mit einer aufladbaren Energiespeicheranordnung ausgestatteten Netzstationen i) in Bezug auf das Umschalten ihrer jeweiligen Lade- und Entladeanordnung zwischen dem Ladezustand, dem Bereitschaftszustand und ggf. dem Entladezustand und ii) in Bezug auf ihre Stromaufnahme beim Laden der jeweiligen Energiespeicheranordnung unter Berücksichtigung der Stromaufnahmen aller von der Einspeiserstation über wenigstens eine gemeinsame Netzstrecke bzw. Stromversorgungsstrecke fernversorgten Netzstationen und einen aus diesen Stromaufnahmen resultierenden Spannungsabfall an einem Streckenwiderstand der Energieversorgungsverbindung zwischen der Einspeiserstation und einer jeweiligen Netzstation derart betreibbar oder dafür konfiguriert oder konfigurierbar sind, dass zu jedem Zeitpunkt an keiner dieser Netzstation die anliegende Versorgungsspannung aufgrund der Fernversorgung von der Einspeiserstation eine für den Betrieb der jeweiligen Funktionsanordnung ausreichende Mindestspannung unterschreitet. Dabei kann man zweckmäßig vorsehen, dass die jeweils mit einer aufladbaren Energiespeicheranordnung ausgestatteten Netzstationen derart konfiguriert sind, dass von den jeweils von der Einspeiserstation zugeführten Ströme ($I_{NS}(i)$) umfassend einen Stromanteil ($I_{NS-B}(i)$) für den Betrieb der jeweiligen elektronischen Funktionsanordnung und einen beim Laden der jeweiligen Energiespeicheranordnung zu diesem Stromanteil hinzukommenden Stromanteil ($I_{NS-L}(i)$) die zum Laden der jeweiligen Energiespeicheranordnung aufgenommenen Stromanteile ($I_{NS-L}(i)$) für zunehmende Länge der Netzstrecke bzw. Stromversorgungsstrecke zwischen der jeweiligen Netzstation und der Einspeiserstation abnehmen.

Allgemein wird es sinnvoll sein, beim Laden einer jeweiligen aufladbaren Energiespeicheranordnung in Form eines elektrochemischen Energiespeichers, also einer ladbaren Batterie bzw. eines ladbaren Akkumulators, das Laden temperaturabhängig durchzuführen, und speziell den Ladestrom in Abhängigkeit von der Umgebungstemperatur des Energiespeichers einzustellen, um die Lebensdauer und die Zuverlässigkeit des Energiespeichers nicht zu gefährden. Man kann beispielsweise einen elektrischen Temperatursensor vorsehen, der die Umgebung unmittelbar an einem Akkumulator-Gehäuse misst und die momentane Temperatur an die Lade- und Entladeanordnung bzw. eine Ladeeinheit der Lade- und Entladeanordnung meldet, um optimal nach einer Lade-Kennlinie zu laden. Die Lade- und Entladeanordnung sollte auf den eingesetzten Batterietyp möglichst gut abgestimmt sein, um für eine möglichst große Lebensdauer eines eingesetzten Akkumulators oder dergleichen zu sorgen. Auch solche Details der Entlade- und Ladevorgänge können fernüberwacht und ferngesteuert werden. In der Regel wird es auch zweckmäßig sein, einen solchen Energiespeicher thermisch zu isolieren, um bei möglichen Tiefsttemperaturen im Winter die Speicherkapazität auf einem hohen Niveau zu erhalten. Auch das Vorsehen einer eine Mindesttemperatur gewährleistenden Heizanordnung ist nicht ausgeschlossen.

Die Einspeiserstation bzw. Einspeiserstationen des Netzabschnitts können gesonderte Stationen sein, die selbst keine sich auf die über das Netzwerk übertragenen Signale beziehende Funktion außer der Stromversorgung für die Netzstationen erfüllen. Demgegenüber ist es aber bevorzugt, dass die Einspeiserstation bzw. die Einspeiserstationen (jeweils) von einer mit einer Einspeiserfunktionalität ausgestatteten Netzstation gebildet sind.

Die angesprochene, sich wenigstens auf die über das Netzwerk übertragene Signale bezogene Funktion kann wenigstens eine der folgenden Funktionen umfassen: eine Signalregenerationsfunktion, eine Signalverstärkungsfunktion, eine Signalentzerrungsfunktion, eine Signalverteilfunktion, eine Signalumwandlungsfunktion.

Es wurde eingangs schon die Möglichkeit erwähnt, dass der Netzabschnitt ein Netzabschnitt eines Koaxialkabelnetzwerkes, vorzugsweise eines breitbandigen Koaxialkabelnetzwerkes, insbesondere eines hybriden Faser-Kabel- (HFC-) Netzwerks ist. Die Übertragungssignale können dann analoge oder/und digitale Fernsehsignale oder/und analoge oder/und digitale Radiosignale (oder allgemein analoge oder/und digitale Rundfunksignale) umfassen.

Die angesprochenen Datenkommunikationssignale können bidirektionale Signale umfassen, auf deren Basis eine Datenkommunikation nach wenigstens einem Datenkommunikationsstandard, vorzugsweise umfassend wenigstens eines von dem Internet-Protokoll, dem SNMP-Protokoll und dem DOCSIS-Protokoll, bereitgestellt wird.

Im Falle eines solchen Koaxialkabelnetzwerkes bzw. breitbandigen Koaxialkabelnetzwerkes können die Netzstationen von sogenannten A-Verstärkern oder/und sogenannten B-Verstärkern oder/und sogenannten A/B-Verstärkern oder/und sogenannten C-Verstärkern der Netzebenen 2 und 3, vorzugsweise der Netzebene 3, des Koaxialkabelnetzwerkes gebildet sein oder jeweils einen oder mehrere solcher Verstärker umfassen. Solche Verstärker werden intern beispielsweise mit einer Gleichspannung von 24 V betrieben, die insbesondere zum Betrieb eines Verstärkers und Streckenentzehrers dient und von einem Stromversorgungsmodul bereitgestellt wird. Das Stromversorgungsmodul kann über das Koaxialkabel aus der Ferne mit einer Wechselspannung von etwa 65 V oder weniger versorgt werden, von der angesprochenen Einspeiserstation her, die selbst als ein Verstärker der angesprochenen Art, insbesondere als A-Verstärker oder B-Verstärker oder A/B-Verstärker ausgeführt sein kann bzw. wenigstens einen solchen Verstärker aufweisen kann.

Die Erfindung stellt nach einem zweiten Aspekt ferner auch ein Verfahren zum Betreiben oder Konfigurieren eines Netzabschnitts eines über einen geographischen Bereich ausgedehnten Datenkommunikationsoder/und Übertragungsnetzwerkes gemäß den vorstehenden Erfindungs- und Weiterbildungsvorschlägen bereit. Für dieses Verfahren wird erfindungsgemäß gemäß Anspruch 12 vorgeschlagen, dass die jeweils mit einer aufladbaren Energiespeicheranordnung ausgestatteten Netzstationen in Bezug auf das Umschalten ihrer jeweiligen Lade- und Entladeanordnung zwischen dem Ladezustand, dem Bereitschaftszustand und ggf. dem Entladezustand derart betrieben oder konfiguriert werden, dass zu jedem Zeitpunkt die Summe aller Stromaufnahmen der von der Einspeiserstation fernversorgten Netzstationen in Form der den Netzstationen von der Einspeiserstation zugeführten Ströme ($I_{NS}(i)$) umfassend einen Stromanteil ($I_{NS-B}(i)$) für den Betrieb der jeweiligen elektronischen Funktionsanordnung und einen beim Laden der jeweiligen Energiespeicheranordnung zu diesem Stromanteil hinzukommenden Stromanteil ($I_{NS-L}(i)$) einen definierten Maximalwert $I_{Max}$ nicht übersteigt, wobei $I_{Max}$ kleiner ist als ein Strom, der der Summe aller den Netzstationen von der Einspeiserstation zugeführten Ströme ($I_{NS}(i) = I_{NS-B}(i) + (I_{NS-L}(i))$ im Falle eines gleichzeitigen Ladens aller Energiespeicheranordnungen entspricht.

Gemäß einer bevorzugten Ausgestaltung des Verfahrens ist vorgesehen, dass die jeweils mit einer aufladbaren Energiespeicheranordnung ausgestatteten Netzstationen i) in Bezug auf das Umschalten ihrer jeweiligen Lade- und Entladeanordnung zwischen dem Ladezustand, dem Bereitschaftszustand und ggf. dem Entladezustand und ii) in Bezug auf ihre Stromaufnahme beim Laden der jeweiligen Energiespeicheranordnung unter Berücksichtigung der Stromaufnahmen aller von der Einspeiserstation über wenigstens eine gemeinsame Netzstrecke bzw. Stromversorgungsstrecke fernversorgten Netzstationen und einen aus diesen Stromaufnahmen resultierenden Spannungsabfall an einem Streckenwiderstand der Energieversorgungsverbindung zwischen der Einspeiserstation und einer jeweiligen Netzstation derart betrieben oder konfiguriert werden, dass zu jedem Zeitpunkt an keiner dieser Netzstationen die anliegende Versorgungsspannung aufgrund der Fernversorgung von der Einspeiserstation eine für den Betrieb der jeweiligen Funktionsanordnung ausreichende Mindestspannung unterschreitet. Dabei kann man zweckmäßig vorsehen, dass die jeweils mit einer aufladbaren Energiespeicheranordnung ausgestatteten Netzstationen derart konfiguriert oder betrieben werden, dass von den jeweils von der Einspeiserstation zugeführten Ströme ($I_{NS}(i)$) umfassend einen Stromanteil ($I_{NS-B}(i)$) für den Betrieb der jeweiligen elektronische Funktionsanordnung und einen beim Laden der jeweiligen Energiespeicheranordnung zu diesem Stromanteil hinzukommenden Stromanteil ($I_{NS-L}(i)$) die zum Laden der jeweiligen Energiespeicheranordnung aufgenommenen Stromanteile ($I_{NS-L}(i)$) für zunehmende Länge der Netzstrecke bzw. Stromversorgungsstrecke zwischen der jeweiligen Netzstation und der Einspeiserstation abnehmen.

Die jeweils mit einer aufladbaren Energiespeicheranordnung ausgestatteten Netzstationen können erfindungsgemäß derart betrieben oder konfiguriert werden, dass eine erhöhte Stromaufnahme wenigstens einer Netzstation aufgrund des Ladens der jeweiligen Energiespeicheranordnung durch Schalten der Stromversorgungsanordnung wenigstens einer anderen Netzstation in den zweiten Betriebszustand zumindest teilweise kompensiert wird.

Bevorzugt wird das Verfahren auf Basis einer Fernsteuerung oder Fernkonfiguration von einer Fernsteuerzentrale durchgeführt. Auch in anderer Hinsicht können die Netzstationen von der/einer Fernsteuerzentrale ferngesteuert oder fernkonfiguriert werden.

Die Erfindung wird im Folgenden ohne Beschränkung der Allgemeinheit anhand von in den Figuren dargestellten bzw. veranschaulichten Ausführungsbeispielen näher erläutert, die sich auf die Netzebene 3 eines breitbandigen Koaxialkabelnetzwerks beziehen, wie es auf Basis des momentan realisierten Verteilernetzes der Unitymedia BW GmbH durch erfindungsgemäße Aufrüstung realisiert werden könnte.

Fig. 1    zeigt schematisch eine typische Baumstruktur eines Netzabschnittes in der Netzebene 3, der mehrere Verstärkerpunkte mit "A-Verstärkern" und "C-Verstärker" aufweist.

Fig. 2    zeigt ein beispielhaftes Blockschaltbild für Komponenten einer erfindungsgemäßen Netzstation im Form eines erfindungsgemäßen "A-Verstärkers" oder "A/B-Verstärkers" oder "C-Verstärkers".

Fig. 3    zeigt ein schematisches Ersatzschaltbild eines Netzabschnittes umfassend eine Einspeiserstation, eine Mehrzahl von Netzstationen, und eine Mehrzahl von vorzugsweise zugleich als Netzstrecken dienenden Stromversorgungsstrecken.

Fig. 4    zeigt ein schematisches Ersatzschaltbild einer Netzstation umfassend eine elektrische Funktionsanordnung und eine Lade- und Entladeanordnung mit einem elektrischen Energiespeicher.

Fig. 5    veranschaulicht ein erfindungsgemäßes Verfahren zum Konfigurieren bzw. Fernsteuern einer Mehrzahl von jeweils mit einer Energiespeicheranordnung ausgestatteten Netzstationen betreffend ein zeitlich abgestimmtes Laden und Entladen.

Fig. 6    veranschaulicht ein erfindungsgemäßes Verfahren zum Konfigurieren bzw. Fernsteuern einer Mehrzahl von jeweils mit einer Energiespeicheranordnung ausgestatteten Netzstationen betreffend ein zeitlich und räumlich abgestimmtes Laden und Entladen.

Fig. 7    gibt eine Übersicht einer etablierten Überwachungsplattform der Netzebene 3, die zur erfindungsgemäßen Fernsteuerung von Lade- und Entladevorgängen nutzbar ist.

Ein erfindungsgemäßes Datenkommunikations- und Übertragungsnetzwerk, ein erfindungsgemäßes Verfahren zum Betreiben oder Konfigurieren eines solchen Netzwerks und ein Verfahren zum erfindungsgemäßen Nachrüsten eines derartigen Netzwerkes wird im Folgenden ohne Beschränkung der Allgemeinheit unter Bezugnahme auf ein modernes Breitbandkabel-Verteilnetz mit moderner HFC-Infrastruktur für Fernseh-, Telefon- und Internet-Dienste erläutert, wie es von der ehemals als Kabel BW GmbH firmierenden Unitymedia BW GmbH in Baden-Württemberg betrieben wird. Die Unitymedia BW GmbH versorgt zur Zeit etwa 2,4 Millionen Haushalte mit TV-Diensten, und rund 800.000 Haushalte nutzen zur Zeit Internet- und Sprachdienste. Dabei werden Bandbreiten bis zu 100 Mbit/s Downstream und bis zu 2,5 Mbit/s Upstream nach EURO-DOCSIS 3.0 flächendeckend angeboten. Neben Privathaushalten werden auch Unternehmens- und Geschäftskunden mit professionellen Diensten versorgt. Die Gewährleistung und Verbesserung der Netzverfügbarkeit ist dabei ein wichtiges Anliegen.

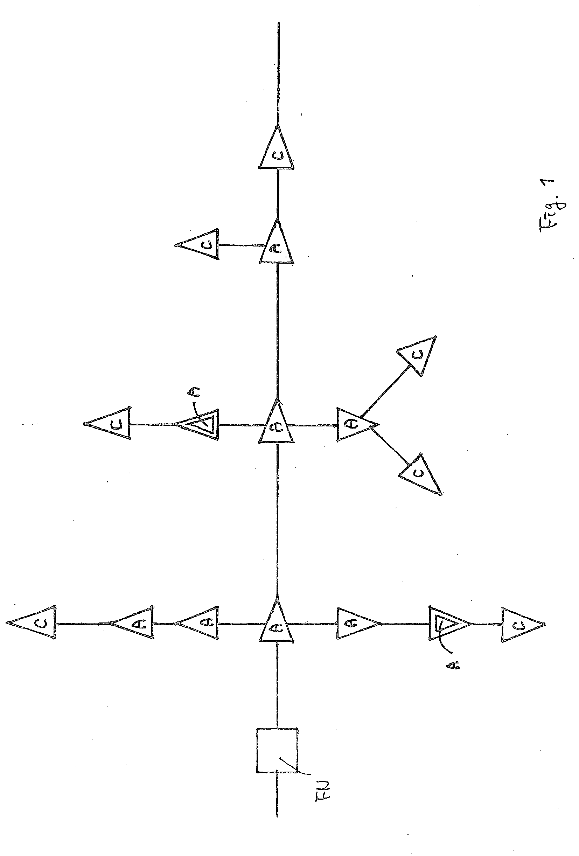

In der Netzebene 3 des Verteilnetzes der Unitymedia BW GmbH werden Analogsignale bis zu einer Frequenz von 862 MHz für Privathaushalte übertragen. Eine sichere stabile Energieversorgung der Streckenverstärker in der Netzebene 3 ist sowohl für solche auf den Privatkunden zielende Dienste als auch für Geschäftswendungen wichtig. Auf Basis der hierin offenbarten Erfindungs- und Weiterbildungsvorschläge lässt sich die Verfügbarkeit erhöhen, indem auch Stromunterbrechungen von der Stromversorgerseite so beherrschbar sind, dass in der Regel keine Dienstausfälle mehr resultieren werden, die nicht vom Kabelnetzbetreiber zu verantworten sind. Figur 1 zeigt schematisch eine typische Baumstruktur der Netzebene 3, mit mehreren Verstärkerpunkten, die "A-Verstärker" bzw. "A/B-Verstärker" und "C-Verstärker" beinhalten können. Die angesprochenen Verstärkerpunkte sind über sogenannte "A-Linien" des Koaxialkabels an eine sogenannten Fiber-Node FN angeschlossen. Von den "C-Verstärkern" erfolgt eine rein passive Signalverteilung über sogenannte "C-Linien" und von diesen über sogenannte Kabelabzweiger zu den Hausübergabepunkten führende D-Linien des Koaxialkabelnetztes.

Im derzeitigen Netz der Unitymedia BW GmbH gibt es etwa 39.000 solcher Verstärkerpunkte, die lokal oder auch aus der Ferne von etwa 5200 Einspeisern mit elektrischer Energie mit etwa 65 V Wechselspannung (Spannungsniveau der vom jeweiligen Einspeiser in das Koaxialkabel eingespeisten Versorgungsspannung) versorgt werden. In der schematischen Figur 1 sind als Einspeiser fungierende "A-Verstärker" durch ein Dreieck mit doppelter Linienführung gekennzeichnet. Kommt es in solch einer Baumstruktur zu einer Stromunterbrechung betreffend die Stromversorgung des Einspeisers, so können sehr viele Endkunden von Dienstausfällen betroffen sein.

Überwiegend sind solche Verstärker in sogenannten "KVZ-Gehäusen" untergebracht, die regelmäßig am Straßenrand platziert sind. Für eine Aufrüstung solcher "Verstärkerpunkte" nach den Erfindungs- und Weiterbildungsvorschlägen bietet es sich an, einen als erfindungsgemäße aufladbare Energiespeicheranordnung dienenden Akkumulator in einem Sockel des jeweiligen "KVZ-Gehäuses" oder allgemein in einem Schranksockel im Falle von anderen technischen Lösungen zu installieren. Eine zugeordnete Lade- und Entladeanordnung kann zusammen mit der normalen Stromversorgungsschaltung für den Betrieb des Verstärkers aufgrund der Fernspeisung vom Einspeiser in einem die übliche elektronische Funktionsanordnung (umfassend Verstärker und Streckenentzerrer) aufnehmenden Baugruppenträger (im Falle der bestehenden "KVZ-Gehäuse" sogenannte "BK-Wanne") untergebracht werden oder zusammen mit dem Akkumulator im Sockel installiert werden.

Die Verstärker und Streckenentzerrer werden bei den bestehenden Verstärkerpunkten über eine Gleichspannung von 24 V betrieben, die von einem jeweiligen Stromversorgungsmodul im Baugruppenträger auf Basis der Fernversorgung von einem Einspeisestandort mit der Versorgungs-Wechselspannung über das Koaxial-Signalkabel bereitgestellt wird. Ein Einspeiserstandort versorgt dabei derzeit bis zu zwei Gruppen von Verstärkern entlang einer jeweiligen Koaxialkabelstrecke, mit bis zu fünf Verstärkerpunkten pro Gruppe. Es ist natürlich nicht grundsätzlich ausgeschlossen, dass von einem Einspeiserstandort mehr als zwei Gruppen von Verstärkerpunkten ferngespeist werden und dass pro Gruppe mehr als fünf Verstärkerpunkten von einem Einspeisestandort her versorgt werden können.

Die im Netz der Unitymedia BW GmbH zur Zeit etwa 5200 betriebenen Einspeiser-Standorte beziehen die notwendige Energie für die Versorgung der zugeordneten Verstärker aus dem öffentlichen 230 V Wechselstromnetz, wobei die jeweilige elektrische Energie von verschiedenen Energieverteilnetzbetreibern bezogen wird. Stromausfälle im jeweiligen öffentlichen Netz haben unmittelbar Dienstausfälle für das Koaxialkabelverteilnetz zur Folge.

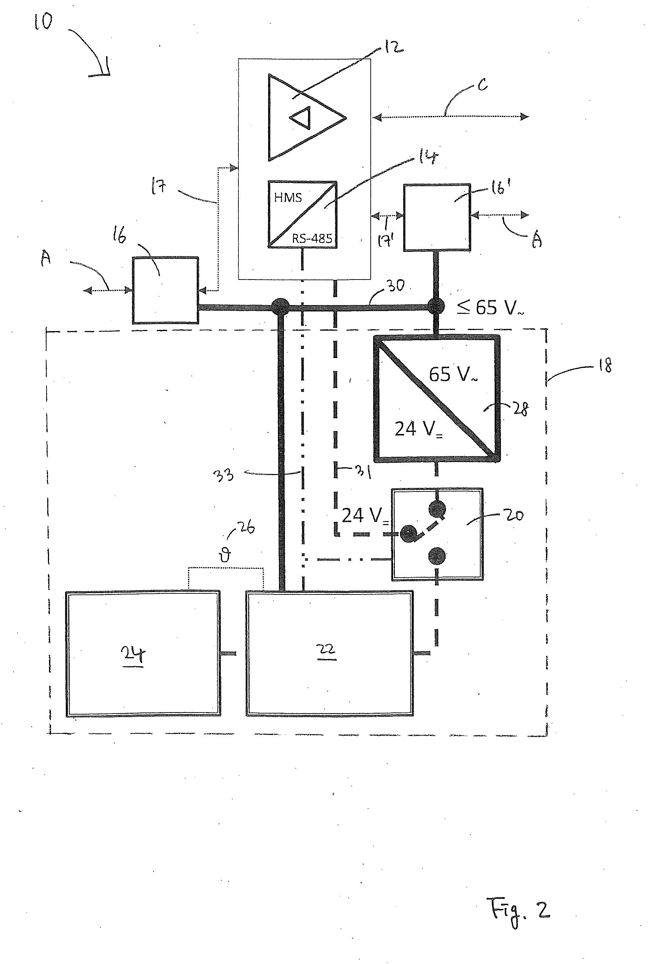

Zur Vermeidung von derartigen Dienstausfällen aufgrund von gegenüber dem Koaxialkabel-Verteilnetz externen Stromausfällen können die bestehenden Verstärker um aufladbare Energiespeicheranordnungen nachgerüstet werden, um die lokale Stromversorgung eines jeweiligen Verstärkers zu puffern. Figur 2 zeigt ein beispielhaftes Blockdiagramm eines derartigen Verstärkerpunktes 10 bzw. einer derartigen Netzstation, umfassend den bzw. die eigentlichen "A/B-Verstärker" bzw. "C-Verstärker" 12, die vorzugsweise rückkanalfähig sind, eine elektronische Steuereinheit 14 und eine Stromversorgungsanordnung 18 umfasst. Die Stromversorgungsanordnung umfasst vorzugsweise einen Umschalter 20, eine Lade- und Entladeanordnung 22, eine wenigstens einen elektrochemischen Akkumulator umfassende Energiespeicheranordnung 24, eine Temperaturüberwachungsanordnung 26 und ein die über das Koaxialkabel im Wege der Fernspeisung erhaltene Versorgungs-Wechselspannung in die Betriebs-Gleichspannung von 24 V umsetzendes Stromversorgungsmodul 28. Eine eingangsseitige, an der A-Linie angeschlossene Fernspeiseweiche 16 führt die über die A-Linie übertragene Übertragungssignale, beispielsweise Analogsignale mit einer Frequenz von 5 MHz bis 862 MHz, dem Verstärker 12 über eine Verbindung 17 zu. Die Versorgungs-Wechselspannung, die für einen ordnungsgemäßen Betrieb der Elektronik ein Mindest-Spannungsniveau von beispielsweise etwa 38 V∼ nicht unterschreiten darf, wird von der Fernspeiseweiche 16 auf einer internen Stromversorgungsstrecke 30 der Netzstation bereitgestellt. Im Falle eines "A/B-Verstärkers" dient eine ausgangsseitige Fernspeiseweiche 16' zur Weiterleitung der über die Fernspeiseweiche 16 erhaltenen Versorgungs-Wechselspannung über bis zu drei ausgangsseitige A-Linien zu nachgeordneten Verstärkerpunkten (insbesondere umfassend "A/B- bzw. C-Verstärker".) Das durch den Verstärker 12 verstärkte bzw. aufbereitete Übertragungssignal wird für die Weiterleitung an die nachgeordneten Verstärker über eine Verbindung 17' der Fernspeiseweiche 16' zugeführt. Im Falle eines "C-Verstärkers" können bis zu acht C-Linien mit verstärkten bzw. aufbereiteten Übertragungssignalen versorgt werden. Die angesprochenen A-Linien und C-Linien sind in Fig. 2 durch mit den Buchstaben A bzw. C gekennzeichnete Doppelpfeile symbolisiert.

Im Falle einer auch als erfindungsgemäße Netzstation dienenden Einspeiserstation könnte ein Netzteil vorgesehen sein, welches am öffentlichen Stromnetz angeschlossen ist und die Versorgungs-Wechselspannung von 65 V auf der Stromversorgungsstrecke 30 bereitstellt. In diesem Falle kann die Fernspeiseweiche 16 zur Fernspeisung einer eingangsseitigen A-Linie dienen.

Die A-Linien dienen insbesondere zur Übertragung der Übertragungssignale über größere Distanzen beispielsweise innerhalb eines Stadtviertels oder in einer Stadt. Die nicht zur Fernspeisung dienenden C-Linien übertragen die Übertragungssignale beispielsweise entlang einer Straße zur Versorgung jeweiliger Hausübergabepunkte mittels über die angesprochenen Kabelabzweiger von der C-Linie abzweigende D-Linien.

Das vorstehend angesprochene Stromversorgungsmodul 28, welches an der Stromversorgungsstrecke 30 angeschlossen ist, wandelt die Versorgungs-Wechselspannung zur internen Betriebs-Gleichspannung von 24 V, welche in einem ersten Schaltzustand des Umschalters 20 über eine Leitung 31 einer die Verstärkerbaugruppe 12 und eine elektronische Steuereinheit 14 umfassenden elektronischen Anordnung zugeführt wird.

Die Lade- und Entladeanordnung 22 ist ebenfalls an der Stromversorgungsstrecke 30 angeschlossen und dafür vorgesehen, in einem Lade-Betriebszustand die Energiespeicheranordnung 24 zu laden, in Abhängigkeit von der mittels der Temperaturüberwachungsanordnung 26 erfassten momentanen Temperatur. Ferner stellt die Lade- und Entladeanordnung 22 eine elektrische Verbindung zwischen der Energiespeicheranordnung 24 und dem Umschalter 20 her, sodass in einem zweiten Schaltzustand des Umschalters 20 die den Verstärker 12 und die elektronische Steuereinheit 14 umfassende elektronische Anordnung auf Basis von in der Energiespeicheranordnung 24 gespeicherter elektrischer Energie mit der Betriebs-Gleichspannung von 24 V versorgt werden kann. Eine Umschaltung in den zweiten Schaltzustand erfolgt immer dann, wenn die durch Fernspeisung dem Verstärkerpunkt 10 zugeführte Versorgungs-Wechselspannung ausfällt, und vorzugsweise auch dann, wenn die an der Netzstation anliegende Versorgungsspannung die den ordnungsgemäßen Betrieb gewährleistende Mindestspannung unterschreitet. In solch einem Fehlerfall wird also die Gleich-Betriebsspannung von 24 V durch die Energiespeicheranordnung 24 gepuffert. Je nach Leistungsaufnahme der elektronischen Funktionsanordnung resultiert eine Pufferzeit $\Delta t_{Puffer}$, mit der die fehlende Versorgungsspannung überbrückt werden kann und die dem Zeitintervall entspricht, in der die Energiespeicheranordnung soweit entladen wird, dass durch weiteres Entladen keine hinreichende Betriebs-Gleichspannung mehr bereitgestellt werden kann.

Man wird die Energiespeicheranordnung in Abhängigkeit von der Leistungsaufnahme der vorhandenen bzw. vorgesehenen Elektronik so dimensionieren, sodass eine geforderte minimale Pufferzeit $\Delta t_{Puffer}$ bei Stromausfall am Einspeise-Standort erreicht wird.

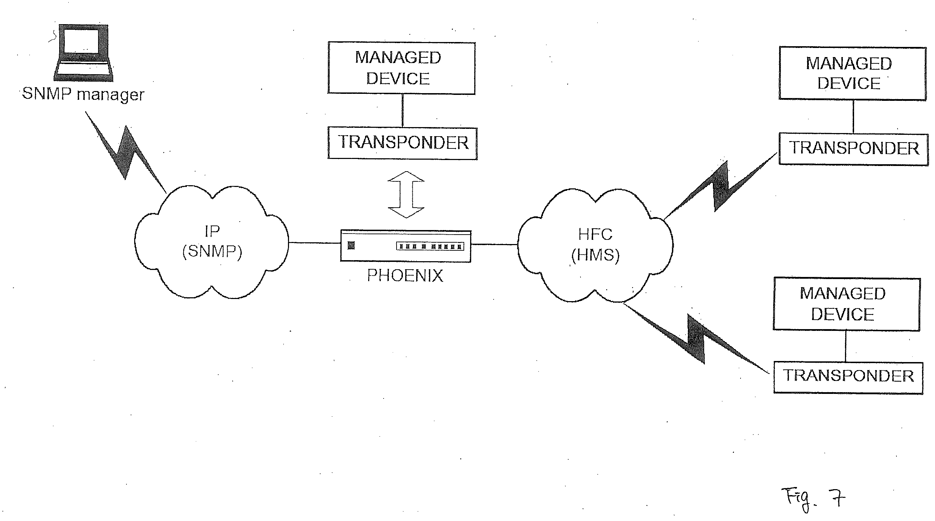

Die elektronische Steuereinheit 14 umfasst einen lokalen Controller (sogenannter HMS-Transponder), der über einen LON ("Local Operating Network")-Feldbus oder eine RS-485 Verbindung 33 die Komponenten der Stromversorgungsanordnung umfassend die Lade- und Entladeanordnung 22 sowie den Umschalter 20 steuert und von einer entfernten Fernsteuerzentrale überwacht und ferngesteuert wird. Der lokale Controller wird beispielsweise von einem sogenannten "Netzmanager" der Netzebene 3 (beispielsweise sogenanntes HMS-Gateway) über einen eigenen Kommunikationskanal in Form einer geträgerten Übertragung über das Koaxialkabel in Abwärtsrichtung angesprochen und kommuniziert in Aufwärtsrichtung in entsprechender Weise auf einer eigenen Trägerfrequenz ("Aufwärts-Träger") in Aufwärtsrichtung mit dem Netzmanager. Der Informationsaustausch kann nach dem sogenannten SNMP-Protokoll erfolgen. Auf die weiteren Ausführungen zu diesem Thema unten in Zusammenhang mit Fig. 7 wird verwiesen.

Der Umschalter 20 verbindet den Verstärker 12 also in einem ersten Betriebszustand mit dem Stromversorgungsmodul 28, sodass der Verstärker 12 bzw. - allgemeiner - eine den Verstärker 12 umfassende elektronische Funktionsanordnung auf Basis des von einer zugeordneten Einspeiserstation zugeführten elektrischen Stroms mit elektrischer Energie in Form der Betriebsgleichspannung 24V= versorgt wird, und in einem zweiten Betriebszustand durch die Lade- und Entladeanordnung 22 mit der Energiespeicheranordnung 24, sodass der Verstärker 12 bzw. die elektronische Funktionsanordnung auf Basis von in der Energiespeicheranordnung gespeicherter elektrischer Energie in Form der Gleichspannung von 24V=mit elektrischer Energie versorgt wird.

Die Bereitstellung der Betriebs-Gleichspannung von 24 V auf Basis der in der Energiespeicheranordnung 24 gespeicherten elektrischen Energie erfolgt nicht nur im Fehlerfall, sondern auch in gewissen zeitlichen Abständen zur Aufrechterhaltung der Speicherfähigkeit der Energiespeicheranordnung 24. Hierzu kann durch Fernsteuerung bzw. Fernkonfiguration vermittels der elektronischen Steuereinheit 14 der Umschalter 20 von dem den ersten Betriebszustand zufolge habenden ersten Schaltzustand in den den zweiten Betriebszustand zufolge habenden zweiten Schaltzustand geschaltet werden, um die Energiespeicheranordnung 24 zu entladen, trotz momentaner auf der Stromversorgungsstrecke 30 aufgrund der Fernspeisung bereitstehender, hinreichender Versorgungsspannung. Nach Entladen der Energiespeicheranordnung 24 wird der Umschalter 20 wieder in den ersten Schaltzustand zurückgeschaltet, und die Energiespeicheranordnung 24 wird dann durch die Lade- und Entladeanordnung 22 auf Basis der auf der Stromversorgungsstrecke 30 bereitstehenden Versorgungsspannung wieder geladen.

Das Umschalten des Umschalters 20 vom ersten in den zweiten Schaltzustand im Fehlerfall, wenn die Versorgungsspannung auf der Stromversorgungsstrecke 30 aufgrund unterbleibender Fernspeisung ausfällt, kann ebenfalls durch Steuerung des Umschalters 20 durch die elektronische Steuereinheit 14 erfolgen. Dem gegenüber ist es aber bevorzugt, dass der Umschalter 20 automatisch, ohne Ansteuerung von der elektronischen Steuereinheit 14 her, vom ersten in den zweiten Schaltzustand schaltet, wenn vom Stromversorgungsmodul 28 die Betriebs-Gleichspannung nicht zugeführt wird.

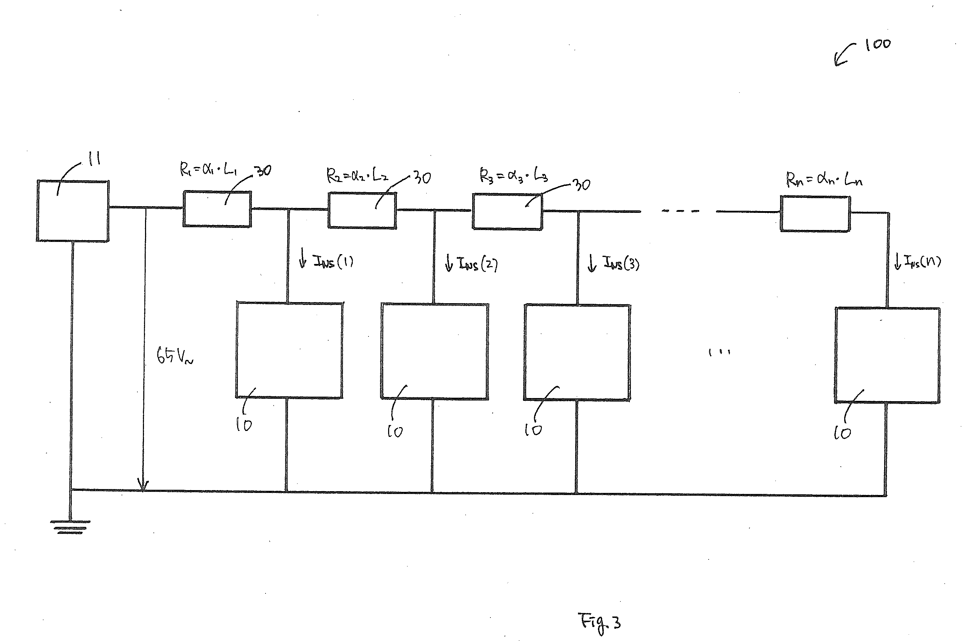

Fig. 3 zeigt ein schematisches Ersatzschaltbild eines Netzabschnitts 100, umfassend eine vorzugsweise selbst als Netzstation dienende Einspeiserstation 11, eine Mehrzahl von der Einspeiserstation 11 her mit elektrischer Energie versorgten Netzstationen 10 und eine Mehrzahl von durch Koaxialkabelstrecken realisierten Netzstrecken 30. Eine jeweilige Koaxialkabelstrecke i zwischen der Einspeiserstation 11 und einer ersten Netzstation 10 bzw. zwischen zwei benachbarten Netzstationen 10 weist einen elektrischen Widerstand $R_i = \alpha_i\, L_i$ auf, wobei $\alpha_i$ ein von dem Kabeltyp abhängiger Widerstandsbelag des Koaxialkabels und $L_i$ eine Länge der betreffenden Koaxialkabelstrecke sind.

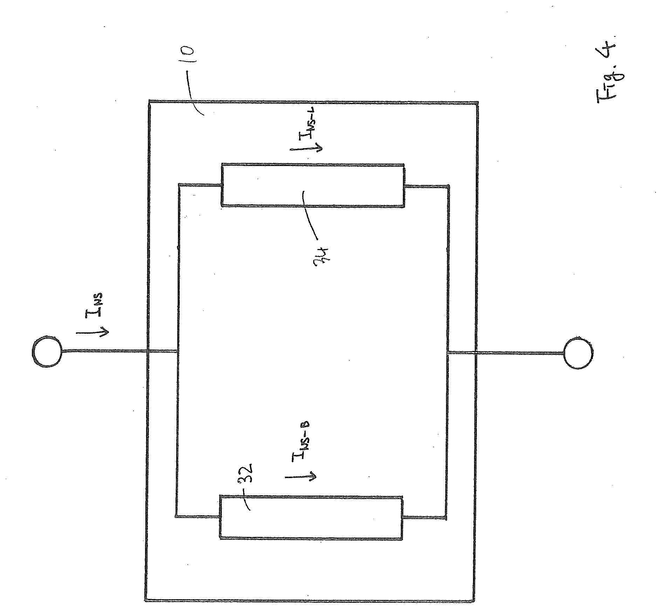

Die Netzstationen 10 ziehen aus dem Koaxialkabel jeweils einen Betriebsstrom $I_{NS}(i)$, der zumindest einen Stromanteil $I_{NS-B}$ umfasst zur Versorgung des Verstärkers 12 bzw. allgemein der elektronischen Funktionsanordnung, wie in Figur 4 schematisch dargestellt. Die elektronische Funktionsanordnung ist hier durch das Element 32 repräsentiert. Wird die Energiespeicheranordnung der jeweiligen Netzstation geladen, so zieht die Netzstation 10 zusätzlich zum Strom $I_{NS-B}$ einen Strom $I_{NS-L}$. Die Lade- und Entladeanordnung 22 und der elektrische Energiespeicher 24 sind in Figur 4 durch das Element 34 repräsentiert. Im ersten Betriebszustand ohne Laden der Energiespeicheranordnung 24 gilt also zumindest näherungsweise $I_{NS} = I_{NS-B}$ für die jeweilige Netzstation, und im ersten Betriebszustand mit gleichzeitigem Laden der Energiespeicheranordnung 24 (zur Unterscheidung vom ersten Betriebszustand ohne Laden vielleicht besser als "dritter Betriebszustand" bezeichenbar) gilt also zumindest näherungsweise $I_{NS} = I_{NS-B} + I_{NS-L}$ für die jeweilige Netzstation. Die Einspeiserstation 11 muss die Summe aller dieser Ströme bereitstellen, soweit diese gleichzeitig auftreten bzw. gleichzeitig auftreten können.

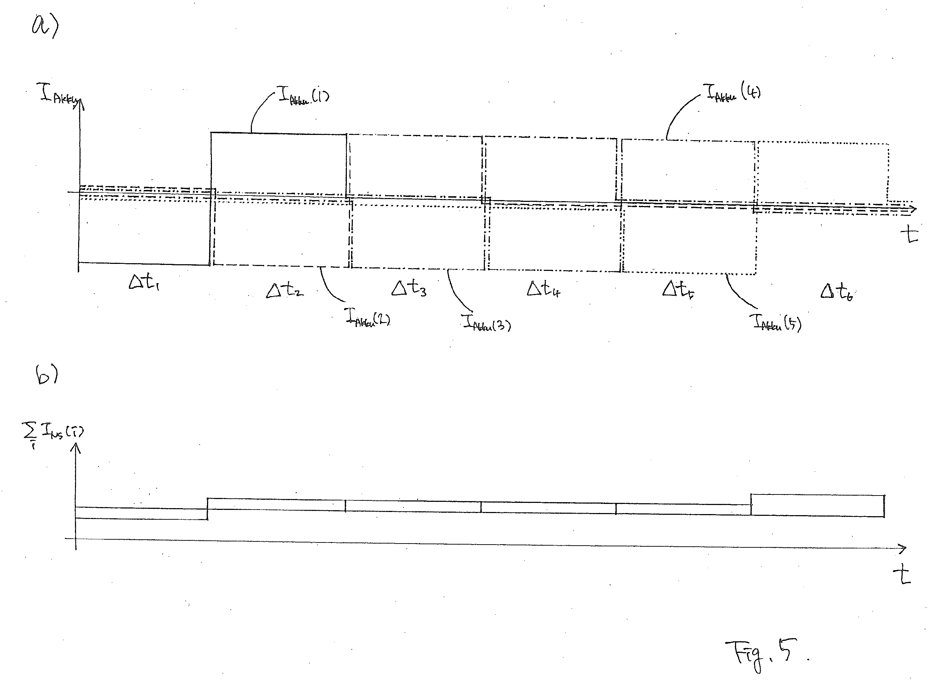

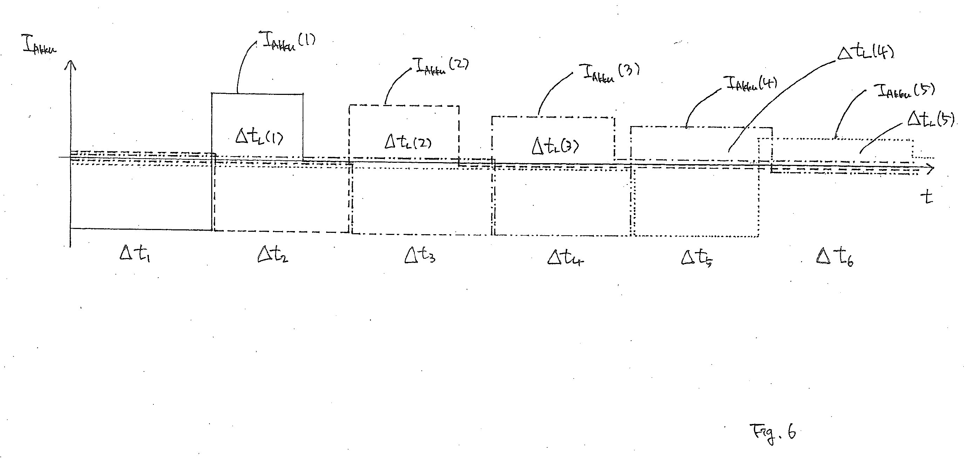

Um den Summenstrom am Einspeiseort, insbesondere den Summenstrom eines Spannungskonstanthalters am Einspeiseort, zu begrenzen und zu vermeiden, dass ein systemspezifischer Grenzwert überschritten wird, erfolgt das zur Pflege der Energiespeicheranordnungen dienende absichtliche Laden und Entladen der Energiespeicheranordnungen erfindungsgemäß in aufeinander abgestimmter Weise, vorzugsweise durch Fernüberwachung und Fern-Konfiguration bzw. Fernsteuerung von einer Netz-Management-Plattform aus. Figur 5 veranschaulicht diesbezüglich ein nur zeitlich abgestimmtes Laden und Entladen und Figur 6 diesbezüglich ein nicht nur zeitlich, sondern auch räumlich abgestimmtes Laden und Entladen in solch einer verteilten Umgebung.

Teildiagramm a) von Figur 5 zeigt beispielhaft und schematisch den zeitlichen Ablauf der in einer jeweiligen Energiespeicheranordnung auftretenden Ladeströme (positiv) und Entladeströme (negativ), und Teildiagramm b) von Figur 5 zeigt schematisch den resultierenden, von der Einspeisestation zu liefernden Summenstrom $\Sigma I_{NS}(i)$, der sich aus der Summe aller Stromanteile $I_{NS-B}$ für den Betrieb der jeweiligen elektronischen Funktionsanordnung aller momentan ihren jeweiligen Akkumulator nicht entladenden Netzstationen und dem Stromanteil $I_{NS-L}$ höchstens genau einer momentan ihren Akkumulator ladenden Netzstation ergibt. Grundsätzlich ist es natürlich nicht ausgeschlossen, dass zugleich auch mehrere Netzstationen ihren jeweiligen Akkumulator laden können oder/und dass zugleich auch mehrere Netzstationen ihren jeweiligen Akkumulator entladen können. In betrachtetem Beispielfall gemäß Figur 5 und entsprechend gemäß Figur 6 lädt aber momentan höchstens eine Netzstation ihren Akkumulator und entlädt aber momentan höchstens eine Netzstation ihren Akkumulator.

Gemäß Figur 5 erfolgt das aufeinander abgestimmte Laden und Entladen der Akkumulatoren von im Beispielfall betrachteten fünf von der gleichen Einspeiserstation her fernversorgten Netzstationen also derart, dass zu einem Zeitpunkt entweder überhaupt kein Akkumulator geladen wird (in Figur 5 nicht dargestellt) oder dass zu einem Zeitpunkt genau ein Akkumulator entladen wird (Zeitintervall $\Delta t_1$ von Figur 5) oder zu einem Zeitpunkt ein zuvor entladener Akkumulator wieder geladen, ein Akkumulator einer anderen Netzstation zur Kompensation des Ladens gleichzeitig entladen und die übrigen Akkumulatoren der anderen Netzstationen nicht entladen werden (Zeitintervalle $\Delta t_2$, $\Delta t_3$, $\Delta t_4$, $\Delta t_5$) oder nur eine Akkumulator geladen wird (Zeitintervall $\Delta t_6$).

Im Zeitintervall $\Delta t_1$ ist der resultierende Summenstrom $\Sigma I_{NS}(i)$ etwas reduziert, da der Akkumulator der Netzstation (1) entladen wird, indem die gespeicherte elektrische Energie zur Versorgung der elektrischen Funktionsanordnung verwendet wird, sodass momentan kein Strom $I_{NS-B}$ aus dem Koaxialkabel gezogen wird. In den Zeitintervallen $\Delta t_2$, bis $\Delta t_5$ erfolgt in einem gewissen Umfang, ggf. auch weitgehend vollständig, eine Kompensation des Ladens eines Akkumulators einer Netzstation durch gleichzeitige Entladung des Akkumulators einer anderen Netzstation, da die momentan ihren Akku entladene Netzstation den Strom $I_{NS-B}$ nicht aus dem Koaxialkabel zieht und die momentan den Akkumulator ladende Netzstation zusätzlich zum Strom $I_{NS-B}$ den Ladestrom $I_{NS-L}$ aus dem Koaxialkabel zieht. Im Zeitintervall $\Delta T_6$ ziehen alle im Beispielfall betrachteten Netzstationen ihren Stromanteil $I_{NS-B}$ aus dem Koaxialkabel und die Station (5) zieht zusätzlich den Ladestrom $I_{NS-L}$ aus dem Koaxialkabel, sodass der Summenstrom $\Sigma I_{NS}(i)$ gegenüber den Zeitintervallen $\Delta T_2$ bis $\Delta T_5$ etwas erhöht ist.

Das anhand von Figur 5 erläuterte Betriebsverfahren, bei dem durch entsprechende Konfiguration bzw. Fernsteuerung das Laden und Entladen der Energiespeicheranordnungen einer Mehrzahl von von einem gemeinsamen Einspeiser her mit elektrischer Energie versorgten Netzstationen zeitlich aufeinander abgestimmt wird, ermöglicht es, die Zusatzbelastung des Einspeisers zu minimieren und zu gewährleisten, dass der von der Einspeiserstation insbesondere über das Koaxialkabel zugeführte Summenstrom $\Sigma I_{NS}(i)$ einen vorbestimmten systemspezifischen Grenzwert nicht überschreitet. Vorzugsweise werden die Lade- und Entladezeiträume bzw. -zeitpunkte für die Energiespeicheranordnungen auf den eingesetzten Akkumulator abgestimmt, um die größtmögliche Lebensdauer des Akkumulators zu gewährleisten.

Zu beachten ist, dass die an einer jeweiligen Netzstation anliegende Eingangs-Versorgungsspannung eine von der Auslegung der Netzstation abhängige minimale Spannung nicht unterschreiten darf. Die Einspeiserstation liefert typischerweise eine konstante Versorgungsspannung von etwa 65 $V_\sim$, genauer beispielsweise von 62,5 bis 64,95 $V_\sim$. Aufgrund der von den Netzstationen aus dem Koaxialkabel gezogenen Ströme $I_{NS}(i)$ treten an den elektrischen Widerständen $R_i = \alpha_i L_i$ der Netzstrecken des Netzabschnitts Spannungsabfälle auf, die die tatsächlich an der jeweiligen Netzstation anliegende Versorgungsspannung gegenüber dem vom Einspeiser gelieferten Spannungsniveau reduzieren. Damit darf ein über das Koaxialkabel zwischen dem Einspeiser und einer jeweiligen Netzstation auftretender Spannungsabfall eine Obergrenze nicht überschreiten, was für alle Netzstationen gelten muss und damit auch für die vom Einspeiser am weitesten entfernte Netzstation, für die ein maximaler Spannungsabfall entsprechend der Summe aller Spannungsabfälle an den einzelnen Koaxialkabelstrecken auftreten wird.

Die Konfiguration des Netzabschnitts kann beispielsweise so sein, dass über das Koaxialkabel maximal ein Spannungsabfall von 27 $V_\sim$ auftreten darf. Bezugnehmend auf die Darstellung in Figur 3 muss dann gelten

$$I_1 R_1 + I_2 (R_{1 +} R_2) + ... + I_n \Sigma_n R_n < 27\ V_\sim$$

Deswegen kann es zweckmäßig oder - in Abhängigkeit von der Auslegung eines möglicherweise schon bestehenden Netzabschnitts - erforderlich sein, dass die verschiedenen, vom gleichen Einspeiser her mit elektrischer Energie versorgten Netzstationen ihren jeweiligen Energiespeicher mit unterschiedlichen Ladeströmen laden, und zwar mit für zunehmenden Abstand vom Einspeiser abnehmenden Ladestrom, sodass die vorstehend genannte oder eine entsprechende Bedingung für einen maximal zulässigen Spannungsabfall erfüllt ist. Figur 6 zeigt ein entsprechendes Beispiel für ein derart zeitlich als auch räumlich aufeinander abgestimmtes Laden und Entladen. Der zum Laden der jeweiligen Energiespeicheranordnung aufgenommene Stromanteil ($I_{NS-L}(i)$) nimmt bei zunehmender Länge der Netzstrecke zwischen der jeweiligen Netzstation und der Einspeiserstation aufgrund der für größere Abstände $\Sigma L_i$ vom Einspeiser abnehmenden Akku-Ladestroms $I_{Akku}(i)$ ab, und für dieselbe geforderte maximale Pufferzeit $\Delta t_{Puffer}$ bei Stromausfall an der Einspeiserstation nimmt die entsprechende Ladezeit $\Delta t_L(i)$ der Lade- und Entladeanordnung einer jeweiligen Netzstation (i) für zunehmenden Abstand von der Einspeiserstation zu, wie in Figur 6 veranschaulicht.

Die für die verschiedenen Stationen vorzusehenden Ladezeiten $\Delta t_L(i)$ und Stromamplituden $I_{Akku}(i)$ sind je nach Standort entsprechend den verbauten Streckenabschnitten zwischen der jeweiligen Netzstation und der Einspeiserstation zu konfigurieren, was vorzugsweise im Wege einer Fernkonfiguration von einer Netzüberwachung aus erfolgt.

Anzumerken ist, dass die Darstellungen der Figuren 5 und 6 nur nicht beschränkende Beispiele geben. Es ist ohne weiteres möglich, dass mehr als fünf Netzstationen von einem Einspeiser her mit der Versorgungs-Wechselspannung versorgt werden, dass zu einem Zeitpunkt gleichzeitig mehrere Netzstationen ihren jeweiligen Akkumulator zum Erhalt der Speicherkapazität entladen und dass zu einem Zeitpunkt zugleich mehrere Netzstationen ihren zuvor entladenen jeweiligen Akkumulator laden. Man wird im Falle solcher abweichenden Betriebsweisen erfindungsgemäß aber vorsehen, dass die zum Laden der Akkumulatoren aus dem Koaxialkabel gezogenen Ströme durch reduzierte Stromaufnahmen anderer Netzstationen aufgrund deren Betriebs auf Basis der im jeweiligen Akkumulator gespeicherten elektrischen Energie zumindest teilweise, am besten möglichst vollständig, kompensiert wird.

Fig. 7 zeigt beispielhaft ein schematisches Bild einer Überwachungs- oder/und Steuerungsplattform der Netzebene 3. Die Steuereinheit der Netzstation, insbesondere der lokale Controller bzw. Transponder, kommuniziert über einen LON-Feldbus bzw. RS485 mit den Komponenten der Netzstation ("Managed Device" in Fig. 7). Der lokale Controller wird von der Netzzentrale, insbesondere dem Netzmanager der Netzebene 3 (insbesondere sogenannter HMS-Gateway "Phoenix") über einen eigenen Kommunikationskanal auf einer eigenen Trägerfrequenz per SNMP ("Simple Network Management Protocol") angesteuert. Auf dieser technischen Grundlage kann man vorteilhaft vorsehen, dass über die in der Netzebene 3 etablierte Netzmanagementplattform bzw. ein hybrides Faser-Kabel (HFC)-Mangementsystem basierend auf der HMS ("Hybrid Management Sublayer Subcommittee")-Spezifikation auch die erfindungsgemäße Lade- und Entladeeinheiten und Akkumulatoren überwacht und fernkonfiguriert bzw. ferngesteuert wird.

Die Funktionen der Netzmanagementplattform können die Überwachung des Status der Lade- und Entladeeinheit, der jeweils verbauten Akkumulatoren, Konfiguration der Lade- und Entladeparameter der jeweiligen Netzstation, Konfiguration der Lade- und Endladezeiträume bzw. -zeitpunkte der jeweiligen Netzstation, Signalisierung möglicher AC-Stromausfälle und Systemtests der Teilkomponenten, die den ordnungsgemäßen Betrieb sicherstellen, umfassen.

## Patentansprüche

1. Netzabschnitt (100) eines über einen geographischen Bereich ausgedehnten Übertragungsnetzwerks,
umfassend eine Mehrzahl von Netzstrecken (A; C), über die Übertragungssignale übertragbar sind,;
sowie umfassend eine Gruppe von Netzstationen (10), die über den geographischen Bereich verteilt sind und jeweils in einer zugeordneten Netzstrecke oder an einem zugeordneten Netzknoten angeordnet sind oder einen jeweiligen Netzknoten (10) bilden, wobei die Netzstationen jeweils eine elektronische Funktionsanordnung (12) aufweisen, die wenigstens eine sich auf die über das Netzwerk übertragenen Signale beziehende Funktion erfüllt;
wobei die Netzstationen über eine von Netzstrecken (A) oder/und von über Stromversorgungsstrecken eines dem Netzabschnitt zugeordneten Stromversorgungsnetzes gebildete Energieversorgungsverbindung von wenigstens einer Einspeiserstation (11) des Netzabschnitts her mit elektrischem Strom fernversorgbar sind, um elektrische Energie für den Betrieb der elektronischen Funktionsanordnung (12) der jeweiligen Netzstation (10) bereitzustellen;
dass die Netzstationen der Gruppe von Netzstationen oder zumindest mehrere Netzstationen einer Teilgruppe der Gruppe von Netzstationen jeweils die folgenden Merkmale aufweisen:

- die Netzstation (10) ist mit wenigstens einer aufladbaren Energiespeicheranordnung (24) zur Speicherung von elektrischer Energie ausgestattet,
- die Energiespeicheranordnung (24) ist durch eine zugeordnete Lade- und Entladeanordnung (22) auf Basis des von der Einspeiserstation zugeführten elektrischen Stroms ($I_{NS}$) mit einem Ladestrom ladbar und ist durch die Lade- und Entladeanordnung (22) entladbar,
- eine die Lade- und Entladeanordnung (22) umfassende Stromversorgungsanordnung (18) ist dafür ausgeführt, in einem ersten Betriebszustand die elektronische Funktionsanordnung (12) auf Basis des von der Einspeiserstation zugeführten elektrischen Stroms ($I_{NS}$) mit elektrischer Energie zu versorgen und in einem zweiten Betriebszustand die elektronische Funktionsanordnung (12) auf Basis von in der Energiespeicheranordnung (24) gespeicherter elektrischer Energie mit elektrischer Energie zu versorgen,
- die Lade- und Entladeanordnung (22) der Stromversorgungsanordnung (18) ist zwischen mehreren Zuständen umschaltbar, umfassend einen Ladezustand, in dem die Energiespeicheranordnung geladen wird, einen Entladezustand, in dem die Energiespeicheranordnung entladen wird und einen Bereitschaftszustand, in dem die Energiespeicheranordnung nicht geladen und nicht entladen wird,

**dadurch gekennzeichnet, dass** die jeweils mit einer aufladbaren Energiespeicheranordnung (24) ausgestatteten Netzstationen (10) in Bezug auf das Umschalten ihrer jeweiligen Lade- und Entladeanordnung (22) zwischen dem Ladezustand, dem Bereitschaftszustand und dem Entladezustand derart konfiguriert sind, dass zu jedem Zeitpunkt die Summe aller Stromaufnahmen der von der Einspeiserstation (11) fernversorgten Netzstationen (10) in Form der den Netzstationen von der Einspeiserstationen zugeführten Ströme ($I_{NS}(i)$) umfassend einen Stromanteil ($I_{NS-B}(i)$) für den Betrieb der jeweiligen elektronischen Funktionsanordnung (12) und einen beim Laden der jeweiligen Energiespeicheranordnung (24) zu diesem Stromanteil hinzukommenden Stromanteil ($I_{NS-L}(i)$) einen definierten Maximalwert $I_{Max}$ nicht übersteigt, wobei $I_{Max}$ kleiner ist als ein Strom, der der Summe aller den Netzstationen (10) von der Einspeiserstation (11) zugeführten Ströme ($I_{NS}(i) = I_{NS-B}(i) + I_{NS-L}(i)$) im Falle eines gleichzeitigen Ladens aller Energiespeicheranordnungen (24) entspricht.

**2.** Netzabschnitt nach Anspruch 1, **dadurch gekennzeichnet, dass** die Stromversorgungsanordnung (18) dafür ausgeführt ist, die Energiespeicheranordnung (24) nur im zweiten Betriebszustand zu entladen, so dass der Entladezustand dem zweiten Betriebszustand entspricht.

**3.** Netzabschnitt nach Anspruch 1 oder 2, **dadurch gekennzeichnet, dass** die die Energiespeicheranordnungen (24) aufweisenden Netzstationen (10) von einer Fernsteuerzentrale aus fernsteuerbar sind, die jeweilige Lade- und Entladeanordnung (22) für das Entladen der geladenen oder teilgeladenen Energiespeicheranordnung (24) aus dem Bereitschaftszustand in den Entladezustand zu schalten oder/und die jeweilige Lade- und Entladeanordnung für das Laden der entladenen oder teilgeladenen Energiespeicheranordnung (24) in den Ladezustand zu schalten,
oder/und **dadurch gekennzeichnet, dass** in die Netzstationen (10) jeweils eine elektronische Steuereinheit (14) integriert ist, zur Steuerung von Funktionen der Netzstation, einschließlich dem Schalten der Lade- und Entladeanordnung (22) zwischen dem Ladezustand, dem Entladezustand und dem Bereitschaftszustand oder/und dem Schalten der Stromversorgungsanordnung (18) zwischen dem ersten und dem zweiten Betriebszustand.

**4.** Netzabschnitt nach Anspruch 3, **dadurch gekennzeichnet, dass** die elektronische Steuereinheit (14) von der Fernsteuerzentrale fernkonfigurierbar oder/und betreffend die Umschaltung der Lade- und Entladeanordnung (22) zwischen dem Ladezustand, dem Entladezustand und dem Bereitschaftszustand fernsteuerbar ist, und **dadurch gekennzeichnet, dass** die elektronische Steuereinheit (14) von der Fernsteuerzentrale fernkonfigurierbar ist, die Lade- und Entladeanordnung (22) zwischen dem Ladezustand, dem Entladezustand und dem Bereitschaftszustand gemäß einem von der Fernsteuerzentrale vorgegebenen zeitlichen Ablaufplan umzuschalten.

**5.** Netzabschnitt nach einem der Ansprüche 1 bis 4, **dadurch gekennzeichnet, dass** die jeweils mit einer aufladbaren Energiespeicheranordnung (24) ausgestatteten Netzstationen (10) i) in Bezug auf das Umschalten ihrer jeweiligen Lade- und Entladeanordnung (22) zwischen dem Ladezustand, dem Bereitschaftszustand und dem Entladezustand und ii) in Bezug auf ihre Stromaufnahme beim Laden der jeweiligen Energiespeicheranordnung (24) unter Berücksichtigung der Stromaufnahmen aller von der Einspeiserstation (11) über wenigstens eine gemeinsame Netzstrecke bzw. Stromversorgungsstrecke fernversorgten Netzstationen (10) und einen aus diesen Stromaufnahmen resultierenden Spannungsabfall an einem Streckenwiderstand der Energieversorgungsverbindung zwischen der Einspeiserstation (11) und einer jeweiligen Netzstation (10) derart konfiguriert sind, dass zu jedem Zeitpunkt an keiner dieser Netzstation die anliegende Versorgungsspannung aufgrund der Fernversorgung von der Einspeiserstation eine für den Betrieb der jeweiligen Funktionsanordnung (12) ausreichende Mindestspannung unterschreitet.

**6.** Netzabschnitt nach Anspruch 5, **dadurch gekennzeichnet, dass** die jeweils mit einer aufladbaren Energiespeicheranordnung (24) ausgestatteten Netzstationen (10) derart konfiguriert sind, dass von den jeweils von der Einspeiserstation (11) zugeführten Ströme ($I_{NS}(i)$) umfassend einen Stromanteil ($I_{NS-B}(i)$) für den Betrieb der jeweiligen elektronische Funktionsanordnung (12) und einen beim Laden der jeweiligen Energiespeicheranordnung zu diesem Stromanteil hinzukommenden Stromanteil ($I_{NS-L}(i)$) die zum Laden der jeweiligen Energiespeicheranordnung (24) aufgenommenen Stromanteile ($I_{NS-B}(i)$) für zunehmende Länge der Netzstrecke bzw. Stromversorgungsstrecke zwischen der jeweiligen Netzstation (10) und der Einspeiserstation (11) abnehmen.

**7.** Netzabschnitt nach einem der Ansprüche 4 bis 6, **dadurch gekennzeichnet, dass** die jeweils mit einer aufladbaren Energiespeicheranordnung (24) ausgestatteten Netzstationen (10) derart konfiguriert sind, dass eine erhöhte Stromaufnahme wenigstens einer Netzstation (10) aufgrund des Ladens der jeweiligen Energiespeicheranordnung (24) durch Schalten der Stromversorgungsanordnung (18) wenigstens einer anderen Netzstation (10) in den zweiten Betriebszustand zumindest teilweise kompensiert wird.

**8.** Netzabschnitt nach einem der Ansprüche 1 bis 7, **dadurch gekennzeichnet, dass** die Einspeiserstation (11) von einer mit einer Einspeiserfunktionalität ausgestatteten Netzstation gebildet ist, oder/und **dadurch gekennzeichnet, dass** die wenigstens eine sich auf die über das Netzwerk übertragenen Signale beziehende Funktion wenigstens eine der folgenden Funktionen umfasst: eine Signalregenerationsfunktion, eine Signalverstärkungsfunktion, eine Signalentzerrungsfunktion, eine Signalverteilfunktion, eine Signalumwandlungsfunktion.

**9.** Netzabschnitt nach einem der Ansprüche 1 bis 8, **dadurch gekennzeichnet, dass** der Netzabschnitt (100) ein Netzabschnitt eines Koaxialkabelnetzwerkes ist,
wobei die Übertragungssignale analoge oder/und digitale Fernsehsignale oder/und Radiosignale umfassen.

**10.** Netzwerkabschnitt nach Anspruch 9, **dadurch gekennzeichnet, dass** die Datenkommunikationssignale bidirektionale Signale umfasst, auf deren Basis eine Datenkommunikation nach wenigstens einem Datenkommunikationsstandard bereitgestellt wird, und dass die Netzstationen (10) von sogenannten A-Verstärkern oder/und sogenannten B-Verstärkern oder/und sogenannten A/B-Verstärkern oder/und sogenannten C-Verstärkern der Netzebenen 2 und 3, des Koaxialkabelnetzwerkes gebildet sind oder jeweils mindestens einen solchen Verstärker umfassen.

**11.** Netzabschnitt nach einem der vorhergehenden Ansprüche,
**dadurch gekennzeichnet, dass** das Übertragungsnetzwerk ein Datenkommunikationsnetzwerk ist, über welches Übertragungssignale in Form von Datenkommunikationssignalen übertragbar sind.

**12.** Verfahren zum Betreiben oder Konfigurieren eines Netzabschnitts (100) eines über einen geographischen Bereich ausgedehnten Übertragungsnetzwerks gemäß einem der Ansprüche 1 bis 11,
**dadurch gekennzeichnet, dass** die jeweils mit einer aufladbaren Energiespeicheranordnung (24) ausgestatteten Netzstationen (10) in Bezug auf das Umschalten ihrer jeweiligen Lade- und Entladeanordnung (22) zwischen dem Ladezustand, dem Bereitschaftszustand und ggf. dem Entladezustand derart betrieben oder konfiguriert werden, dass zu jedem Zeitpunkt die Summe aller Stromaufnahmen der von der Einspeiserstation (11) fernversorgten Netzstationen (10) in Form der den Netzstationen von der Einspeiserstation zugeführten Ströme ($I_{NS}$(i)) umfassend einen Stromanteil ($I_{NS-B}$(i)) für den Betrieb der jeweiligen elektronischen Funktionsanordnung (12) und einen beim Laden der jeweiligen Energiespeicheranordnung (24) zu diesem Stromanteil hinzukommenden Stromanteil ($I_{NS-L}$(i)) einen definierten Maximalwert $I_{Max}$ nicht übersteigt, wobei $I_{Max}$ kleiner ist als ein Strom, der der Summe aller den Netzstationen (10) von der Einspeiserstation (11) zugeführten Ströme ($I_{NS}$(i) = $I_{NS-B}$(i) + $I_{NS-L}$(i)) im Falle eines gleichzeitigen Ladens aller Energiespeicheranordnungen (24) entspricht.

**13.** Verfahren nach Anspruch 12, **dadurch gekennzeichnet, dass** die jeweils mit einer aufladbaren Energiespeicheranordnung (24) ausgestatteten Netzstationen (10) i) in Bezug auf das Umschalten ihrer jeweiligen Lade- und Entladeanordnung (22) zwischen dem Ladezustand, dem Bereitschaftszustand und dem Entladezustand und ii) in Bezug auf ihre Stromaufnahme beim Laden der jeweiligen Energiespeicheranordnung (24) unter Berücksichtigung der Stromaufnahmen aller von der Einspeiserstation (11) über wenigstens eine gemeinsame Netzstrecke bzw. Stromversorgungsstrecke fernversorgten Netzstationen (10) und einen aus diesen Stromaufnahmen resultierenden Spannungsabfall an einem Streckenwiderstand der Energieversorgungsverbindung zwischen der Einspeiserstation (11) und einer jeweiligen Netzstation (10) derart konfiguriert sind, dass zu jedem Zeitpunkt an keiner dieser Netzstationen die anliegende Versorgungsspannung aufgrund der Fernversorgung von der Einspeiserstation eine für den Betrieb der jeweiligen Funktionsanordnung (12) ausreichende Mindestspannung unterschreitet.

**14.** Verfahren nach Anspruch 13, **dadurch gekennzeichnet, dass** die jeweils mit einer aufladbaren Energiespeicheranordnung (24) ausgestatteten Netzstationen (10) derart konfiguriert oder betrieben werden, dass von den jeweils von der Einspeiserstation (11) zugeführten Ströme ($I_{NS}$(i)) umfassend einen Stromanteil ($I_{NS-B}$(i)) für den Betrieb der jeweiligen elektronischen Funktionsanordnung (12) und einen beim Laden der jeweiligen Energiespeicheranordnung (24) zu diesem Stromanteil hinzukommenden Stromanteil ($I_{NS-L}$(i)) die zum Laden der jeweiligen Energiespeicheranordnung aufgenommenen Stromanteile ($I_{NS-L}$(i)) für zunehmende Länge der Netzstrecke bzw. Stromversorgungsstrecke zwischen der jeweiligen Netzstation (10) und der Einspeiserstation (11) abnehmen.

**15.** Verfahren nach einem der Ansprüche 12 bis 14, **dadurch gekennzeichnet, dass** die jeweils mit einer aufladbaren Energiespeicheranordnung (24) ausgestatteten Netzstationen (10) derart konfiguriert sind, dass eine erhöhte Stromaufnahme wenigstens einer Netzstation (10) aufgrund des Ladens der jeweiligen Energiespeicheranordnung (24) durch Schalten der Stromversorgungsanordnung (18) wenigstens einer anderen Netzstation (10) in den zweiten Betriebszustand zumindest teilweise kompensiert wird.

**Claims**

**1.** Network portion (100) of a transmission network that extends over a geographical area,
comprising a plurality of network paths (A; C) via which transmission signals can be transmitted;
and comprising a group of network stations (10) which are distributed over the geographical area and are each arranged in an associated network path or at an associated network node or form a relevant network node (10), the network stations each comprising an electronic functional arrangement (12) which fulfils at least one function that relates to the signals transmitted via the network;
it being possible to remotely supply the network stations with electric power from at least one feeder station (11) of the network portion via an energy supply connection formed of network paths (A) and/or power supply paths of a power supply network associated with the network portion, in order to provide electrical energy for the operation of the electronic functional arrangement (12) of the relevant network station (10);

the network stations of the group of network stations or at least a plurality of network stations of a subgroup of the group of network stations each comprising the following features:

- the network station (10) is equipped with at least one rechargeable energy storage arrangement (24) for storing electrical energy,
- the energy storage arrangement (24) can be charged with a charging current by means of an associated charging and discharging arrangement (22) on the basis of the electrical current ($I_{NS}$) delivered by the feeder station and can be discharged by means of the charging and discharging arrangement (22),
- a power supply arrangement (18) comprising the charging and discharging arrangement (22) is designed, in a first operative state, to supply the electronic functional arrangement (12) with electrical energy on the basis of the electrical current ($I_{NS}$) delivered by the feeder station, and, in a second operative state, to supply the electronic functional arrangement (12) with electrical energy on the basis of the electrical energy stored in the energy storage arrangement (24),
- the charging and discharging arrangement (22) of the power supply arrangement (18) can be switched between a plurality of states, comprising a charge state, in which the energy storage arrangement is charged, a discharge state, in which the energy storage arrangement is discharged, and a standby state, in which the energy storage arrangement is neither charged nor discharged,

**characterised in that** the network stations (10) equipped in each case with a rechargeable energy storage arrangement (24), in relation to the switching of the relevant charging and discharging arrangement (22) thereof between the charge state, the standby state and the discharge state, are configured such that the sum of the power consumption of all the network stations (10) supplied remotely by the feeder station (11), in the form of the currents ($I_{NS}(i)$) supplied to the network stations by the feeder stations and comprising a current portion ($I_{NS-B}(i)$) for operating the relevant electronic functional arrangement (12) and a current portion ($I_{NS-L}(i)$) that is added to said current portion during charging of the relevant energy storage arrangement (24), at no point exceeds a defined maximum value $I_{Max}$, $I_{Max}$ being less than a current which corresponds to the sum of all the currents ($I_{NS}(i) = I_{NS-B}(i) + I_{NS-L}(i)$) delivered to the network stations (10) by the feeder station in the event of simultaneous charging of all the energy storage arrangements (24).

2. Network portion according to claim 1, **characterised in that** the power supply arrangement (18) is designed to discharge the energy storage arrangement (24) only in the second operative state, such that the discharge state corresponds to the second operative state.

3. Network portion according to either claim 1 or claim 2, **characterised in that** the network stations (10) comprising the energy storage arrangements (24) can be remotely controlled by a remote control centre to switch the relevant charging and discharging arrangement (22) from the standby state into the discharge state so as to discharge the charged or partially charged energy storage arrangement (24) and/or in order to switch the relevant charging and discharging arrangement to the charge state so as to charge the discharged or partially charged energy storage arrangement (24),

and/or **characterised in that** an electronic control unit (14) is integrated in each of the network stations (10) in order to control functions of the network station, including the switching of the charging and discharging arrangement (22) between the charge state, the discharge state and the standby state and/or the switching of the power supply arrangement (18) between the first and second operative state.

4. Network portion according to claim 3, **characterised in that** the electronic control unit (14) can be remotely configured and/or, in relation to the switching of the charging and discharging arrangement (22) between the charge state, the discharge state and the standby state, remotely controlled by the remote control centre, and **characterised in that** the electronic control unit (14) can be remotely configured by the remote control centre to switch the charging and discharging arrangement (22) between the charge state, the discharge state and the standby state in accordance with a time schedule that is predetermined by the remote control centre.

5. Network portion according to any of claims 1 to 4, **characterised in that** the network stations (10) each equipped with a rechargeable energy storage arrangement (24), i) in relation to the switching of the relevant charging and discharging arrangement (22) thereof between the charge state, the standby state and the discharge state and ii) in relation to the power consumption thereof during charging of the relevant energy storage arrangement (24) in consideration of the power consumption of all the network stations (10) remotely supplied by the feeder station (11) via at least one common network path or power supply path and a voltage drop resulting from said power consumption at a path resistor of the energy supply connection between the feeder station (11) and a relevant network station (10), are configured such that the applied supply voltage at no point drops below a minimum voltage that is sufficient for operation of the relevant functional arrangement (12) at any of said network stations on account of the remote supply from the feeder station.

6. Network portion according to claim 5, **characterised in that** the network stations (10) in each case equipped with a rechargeable energy storage arrangement (24) are configured such that, from the currents ($I_{NS}(i)$) delivered in each case by the feeder station (11) and comprising a current portion ($I_{NS-B}(i)$) for operating the relevant electronic functional arrangement (12) and a current portion ($I_{NS-L}(i)$) that is added to said current portion during charging of the relevant energy storage arrangement, the current portions ($I_{NS-B}(i)$) input for charging the relevant energy storage arrangement (24) decrease as the length of the network path or power generation path between the relevant network station (10) and the feeder station (11) increases.

7. Network portion according to any of claims 4 to 6, **characterised in that** the network stations (10) in each case equipped with a rechargeable energy storage arrangement (24) are configured such that an increased power consumption of at least one network station (10) on account of charging of the relevant energy storage arrangement (24) is compensated for at least in part by switching the power supply arrangement (18) of at least one other network station (10) to the second operative state.

8. Network portion according to any claims 1 to 7, **characterised in that** the feeder station (11) is formed of a network station equipped with a feeder functionality, and/or **characterised in that** the at least one function relating to the signals transmitted via the network comprises at least one of the following functions: a signal regeneration function, a signal amplification function, a signal equalisation function, a signal distribution function, a signal conversion function.

9. Network portion according to any of claims 1 to 8, **characterised in that** the network portion (100) is a network portion of a coaxial cable network, the transmission signals comprising analogue and/or digital television signals and/or radio signals.

10. Network portion according to claim 9, **characterised**

**in that** the data communication signals comprise bidirectional signals, on the basis of which data communication according to at least one data communication standard is provided, and **in that** the network stations (10) are formed of A amplifiers and/or B amplifiers and/or A/B amplifiers and/or C amplifiers of network levels 2 and 3 of the coaxial cable network or in each case comprise at least one such amplifier.

11. Network portion according to any of the preceding claims, **characterised in that** the transmission network is a data communication network via which transmission signals can be transmitted in the form of data communication signals.

12. Method for operating or configuring a network portion (100) of a transmission network according to any of claims 1 to 11 that extends over a geographical area, **characterised in that** the network stations (10) in each case equipped with a rechargeable energy storage arrangement (24), in relation to the switching of the relevant charging and discharging arrangement (22) thereof between the charge state, the standby state and optionally the discharge state, are operated or configured such that the sum of the power consumption of all the network stations (10) remotely supplied by the feeder station (11), in the form of the currents ($I_{NS}(I)$) supplied to the network stations by the feeder stations and comprising a current portion ($I_{NS-B}(i)$) for operating the relevant electronic functional arrangement (12) and a current portion ($I_{NS-L}(i)$) that is added to said current portion during charging of the relevant energy storage arrangement (24), at no point exceeds a defined maximum value $I_{Max}$, $I_{Max}$ being less than a current which corresponds to the sum of all the currents ($I_{NS}(i) = I_{NS-B}(i) + I_{NS-L}(i)$) delivered to the network stations (10) by the feeder station (11) in the event of simultaneous charging of all the energy storage arrangements (24).

13. Method according to claim 12, **characterised in that** the network stations (10) in each case equipped with a rechargeable energy storage arrangement (24), i) in relation to the switching of the relevant charging and discharging arrangement (22) thereof between the charge state, the standby state and the discharge state and ii) in relation to the power consumption thereof during charging of the relevant energy storage arrangement (24) in consideration of the power consumption of all the network stations (10) remotely supplied by the feeder station (11) via at least one common network path or power supply path and a voltage drop resulting from said power consumption at a path resistor of the energy supply connection between the feeder station (11) and a relevant network station (10), are configured such that the applied supply voltage at no point drops below a minimum voltage that is sufficient for operation of the relevant functional arrangement (12) at any of said network stations on account of the remote supply from the feeder station.

14. Method according to claim 13, **characterised in that** the network stations (10) in each case equipped with a rechargeable energy storage arrangement (24) are configured or operated such that, from the currents ($I_{NS}(i)$) delivered in each case by the feeder station (11) and comprising a current portion ($I_{NS-B}(i)$) for operating the relevant electronic functional arrangement (12) and a current portion ($I_{NS-L}(i)$) that is added to said current portion during charging of the relevant energy storage arrangement (24), the current portions ($I_{NS-L}(i)$) input for charging the relevant energy storage arrangement decrease as the length of the network path or power generation path between the relevant network station (10) and the feeder station (11) increases.

15. Method according to any of claims 12 to 14, **characterised in that** the network stations (10) in each case equipped with a rechargeable energy storage arrangement (24) are configured such that an increased power consumption of at least one network station (10) on account of charging of the relevant energy storage arrangement (24) is compensated for at least in part by switching the power supply arrangement (18) of at least one other network station (10) to the second operative state.


**Revendications**

1. Section de réseau (100) d'un réseau de transmission étendu sur une zone géographique, comprenant une pluralité d'itinéraires de réseau (A ; C), par lesquels les signaux de transmission peuvent être transmis ; comprenant de même un groupe de stations de réseau (10), qui sont réparties sur la zone géographique et sont disposées à chaque fois dans un itinéraire de réseau affecté ou sur un noeud de réseau affecté ou forment un noeud de réseau respectif (10), dans laquelle les stations de réseau présentent à chaque fois une matrice fonctionnelle électronique (12) qui remplit au moins une fonction se rapportant aux signaux transmis par le réseau ; dans laquelle les stations de réseau peuvent être alimentées à distance en courant électrique à partir d'au moins une station d'alimentation (11) de la section de réseau via une liaison d'alimentation en énergie, formée par les itinéraires de réseau (A) ou / et par des itinéraires d'alimentation électrique d'un réseau d'alimentation électrique affecté à la section de réseau, pour mettre à disposition de l'énergie électrique pour le fonctionnement de la matrice fonctionnelle électronique (12) de la station de réseau (10) ;

en ce que les stations de réseau du groupe de stations de réseau ou au moins plusieurs stations de réseau d'un groupe partiel du groupe de stations de réseau présentent à chaque fois les caractéristiques suivantes :

- la station de réseau (10) est équipée d'au moins un dispositif accumulateur d'énergie rechargeable (24) pour accumuler de l'énergie électrique,
- le dispositif accumulateur d'énergie (24) est chargeable avec un courant de charge par un dispositif de chargement et de déchargement affecté (22) sur la base du courant électrique ($I_{NS}$) fourni par la station d'alimentation et est déchargeable par le dispositif de chargement et de déchargement (22),
- un dispositif d'alimentation en courant (18) comprenant le dispositif de chargement et de déchargement (22) est réalisé dans le but, dans un premier état de fonctionnement, d'alimenter en énergie électrique la matrice fonctionnelle électronique (12) sur la base du courant électrique ($I_{NS}$) fourni par la station d'alimentation et, dans un deuxième état de fonctionnement, d'alimenter en énergie électrique la matrice fonctionnelle électronique (12) sur la base de l'énergie électrique accumulée dans le dispositif accumulateur d'énergie (24),
- le dispositif de chargement et de déchargement (22) du dispositif d'alimentation en courant (18) peut être commuté entre plusieurs états, comprenant un état de charge dans lequel le dispositif accumulateur d'énergie est chargé, un état de décharge dans lequel le dispositif accumulateur d'énergie est déchargé et un état d'attente dans lequel le dispositif accumulateur d'énergie n'est ni chargé, ni déchargé, **caractérisée en ce que** les stations de réseau (10) équipées à chaque fois d'un dispositif accumulateur d'énergie rechargeable (24) sont configurées par rapport à la commutation de leur dispositif respectif de chargement et de déchargement (22) entre l'état de charge, l'état d'attente et l'état de décharge, de manière telle qu'à tout moment la somme de toutes les consommations de courant des stations de réseau (10) alimentées à distance par la station d'alimentation (11) sous forme des courants ($I_{NS}(i)$) fournis aux stations de réseau par les stations d'alimentation, comprenant une part de courant ($I_{NS-B}(i)$) pour le fonctionnement de la matrice fonctionnelle électronique respective (12) et une part de courant ($I_{NS-L}(i)$) s'ajoutant à cette part de courant lors du chargement du dispositif accumulateur d'énergie respectif (24), ne dépasse par une valeur maximale définie $I_{max}$, $I_{max}$ étant inférieure à un courant qui correspond à la somme de tous les courants ($I_{NS}$(i) = ($I_{NS-B}$(i) + ($I_{NS-L}$(i)) fournis par la station d'alimentation (11) aux stations de réseau (10) dans le cas d'un chargement simultané de tous les dispositifs accumulateurs d'énergie (24).

2. Section de réseau selon la revendication 1, **caractérisée en ce que** le dispositif d'alimentation en courant (18) est réalisé dans le but de décharger le dispositif accumulateur d'énergie (24) uniquement dans le deuxième état de fonctionnement de sorte que l'état de décharge correspond au deuxième état de fonctionnement.

3. Section de réseau selon la revendication 1 ou 2, **caractérisée en ce que** les stations de réseau (10) présentent des dispositifs accumulateurs d'énergie (24) peuvent être commandées à distance par une centrale de commande à distance, afin de commuter le dispositif de chargement et de déchargement respectif (22) pour le déchargement du dispositif accumulateur d'énergie chargé ou partiellement chargé (24) de l'état d'attente à l'état de décharge ou / et afin de commuter le dispositif de chargement et de déchargement respectif pour le chargement du dispositif accumulateur d'énergie chargé ou partiellement chargé (24) dans l'état de charge, ou / et **caractérisée en ce que** dans les stations de réseau (10) est intégrée à chaque fois une unité de commande électronique (14), pour la commande des fonctions de la station de réseau, y compris la commutation du dispositif de chargement et de déchargement (22) entre l'état de charge, l'état de décharge et l'état d'attente ou / et la commutation du dispositif d'alimentation en courant (18) entre le premier et le deuxième état de fonctionnement.

4. Section de réseau selon la revendication 3, **caractérisée en ce que** l'unité de commande électronique (14) peut être configurée ou / et peut être commandée à distance par la centrale de commande à distance en ce qui concerne la commutation du dispositif de chargement et de déchargement (22) entre l'état de charge, l'état de décharge et l'état d'attente, et **caractérisée en ce que** l'unité de commande électronique (14) peut être configurée à distance par la centrale de commande à distance, afin de commuter le dispositif de chargement et de déchargement (22) entre l'état de charge, l'état de décharge et l'état d'attente selon un plan de déroulement temporel prédéfini par la centrale de commande à distance.

5. Section de réseau selon l'une des revendications 1 à 4, **caractérisée en ce que** les stations de réseau (10) équipées à chaque fois d'un dispositif accumulateur d'énergie rechargeable (24) sont configurées i) par rapport à la commutation de leur dispositif de chargement et de déchargement respectif (22) entre l'état de charge, l'état d'attente et, le cas échéant, l'état de décharge et ii) par rapport à leur consommation de courant lors du chargement du dispositif accumulateur d'énergie respectif (24) en tenant compte des consommations de courant de toutes les stations de réseau (10) alimentées à distance par la station d'alimentation (11) via au moins un itinéraire de réseau ou un itinéraire d'alimentation électrique commun, et à une chute de tension résultant de ces consommations de courant au niveau d'une résistance d'itinéraire de la liaison d'alimentation en énergie entre la station d'alimentation (11) et une station de réseau respective (10), de telle sorte qu'à tout moment à aucune de ces stations de réseau, la tension d'alimentation appliquée en raison de l'alimentation à distance par la station d'alimentation n'est inférieure à une tension minimale suffisante pour le fonctionnement de la matrice fonctionnelle respective (12) .

6. Section de réseau selon la revendication 5, **caractérisée en ce que** les stations de réseau (10) équipées à chaque fois d'un dispositif accumulateur d'énergie rechargeable (24) sont configurées de manière telle que des courants ($I_{NS}$(i)) fournis à chaque fois par la station d'alimentation (11), comprenant une part de courant ($I_{NS-B}$(i)) pour le fonctionnement de la matrice fonctionnelle électronique respective (12) et une part de courant ($I_{NS-L}$(i)) s'ajoutant à cette part de courant lors du chargement du dispositif accumulateur d'énergie respectif, captent les parts de courant ($I_{NS-B}$(i)) absorbées pour le chargement du dispositif accumulateur d'énergie respectif (24) pour une longueur croissante de l'itinéraire de réseau ou de l'itinéraire d'alimentation électrique entre la station de réseau respective (10) et la station d'alimentation (11).

7. Section de réseau selon l'une des revendications 4 à 6, **caractérisée en ce que** les stations de réseau (10) équipées à chaque fois d'un dispositif accumulateur d'énergie rechargeable (24) sont configurées de manière telle qu'une consommation de courant accrue d'au moins une station de réseau (10) en raison du chargement du dispositif accumulateur d'énergie respectif (24) est compensée au moins partiellement par la commutation du dispositif d'alimentation électrique (18) d'au moins une autre station de réseau (10) dans le deuxième état de fonctionnement.

8. Section de réseau selon l'une des revendications 1 à 7, **caractérisée en ce que** la station d'alimentation (11) est formée par une station de réseau dotée d'une fonctionnalité d'alimentation, ou / et **caractérisée en ce que** la au moins une fonction se rapportant aux signaux transmis par le réseau, comprend au moins une des fonctions suivantes : une fonction de régénération du signal, une fonction de renforcement du signal, une fonction de redressement du signal, une fonction de répartition du signal, une fonction de transformation du signal.

9. Section de réseau selon l'une des revendications 1 à 8, **caractérisée en ce que** la section de réseau (100) est une section de réseau d'un réseau à câble coaxial, dans laquelle les signaux de transmission comprennent des signaux de télévision ou / et des signaux de radio analogiques ou / et numériques.

10. Section de réseau selon la revendication 9, **caractérisée en ce que** les signaux de communication de données comprennent des signaux bidirectionnels, sur la base desquels une communication de données est mise à disposition selon au moins une norme de communication de données, et **en ce que** les stations de réseau (10) sont formées par des dits amplificateurs A ou / et des dits amplificateurs B ou / et des dits amplificateurs C des niveaux de réseau 2 et 3, du réseau à câble coaxial ou comprennent à chaque fois au moins un tel amplificateur.

11. Section de réseau selon l'une des revendications précédentes, **caractérisée en ce que** le réseau de transmission est un réseau de communication de données, par lequel des signaux de transmission peuvent être transmis sous forme de signaux de communication de données.

12. Procédé pour exploiter ou configurer une section de réseau (100) d'un réseau de transmission étendu sur une zone géographique selon l'une des revendications 1 à 11, **caractérisé en ce que** les stations de réseau (10) équipées à chaque fois d'un dispositif accumulateur d'énergie rechargeable (24) sont exploitées ou configurées par rapport à la commutation de leur dispositif respectif de chargement et de déchargement (22) entre l'état de charge, l'état d'attente et, le cas échéant, l'état de décharge, de manière telle qu'à tout moment la somme de toutes les consommations de courant des stations de réseau (10) alimentées à distance par la station d'alimentation (11) sous forme des courants ($I_{NS}(i)$) fournis aux stations de réseau par la station d'alimentation comprenant une part de courant ($I_{NS-B}(i)$) pour le fonctionnement de la matrice fonctionnelle électronique respective (12) et une part de courant ($I_{NS-L}(i)$) s'ajoutant à cette part de courant lors du chargement du dispositif accumulateur d'énergie respectif (24), ne dépasse par une valeur maximale définie $I_{max}$, $I_{max}$ étant inférieure à un courant qui correspond à la somme de tous les courants ($I_{NS}(i) = (I_{NS-B}(i) + (I_{NS-L}(i))$) fournis par la station d'alimentation aux stations de réseau (10) dans le cas d'un chargement simultané de tous les dispositifs accumulateurs d'énergie (24).

13. Procédé selon la revendication 12, **caractérisé en ce que** les stations de réseau (10) équipées à chaque fois d'un dispositif accumulateur d'énergie rechargeable (24) sont configurées i) par rapport à la commutation de leur dispositif de chargement et de déchargement respectif (22) entre l'état de charge, l'état d'attente et l'état de décharge et ii) par rapport à leur consommation de courant lors du chargement du dispositif accumulateur d'énergie respectif (24) en tenant compte des consommations de courant de toutes les stations de réseau (10) alimentées à distance par la station d'alimentation (11) via au moins un itinéraire de réseau ou un itinéraire d'alimentation électrique commun, et à une chute de tension résultant de ces consommations de courant au niveau d'une résistance d'itinéraire de la liaison d'alimentation en énergie entre la station d'alimentation (11) et une station de réseau respective (10), de telle sorte qu'à tout moment à aucune de ces stations de réseau, la tension d'alimentation appliquée en raison de l'alimentation à distance par la station d'alimentation n'est inférieure à une tension minimale suffisante pour le fonctionnement de la matrice fonctionnelle respective (12).

14. Procédé selon la revendication 13, **caractérisé en ce que** les stations de réseau (10) équipées à chaque fois d'un dispositif accumulateur d'énergie rechargeable (24) sont configurées ou exploitées de manière telle que des courants ($I_{NS}(i)$) fournis à chaque fois par la station d'alimentation (11), comprenant une part de courant ($I_{NS-B}(i)$) pour le fonctionnement de la matrice fonctionnelle électronique respective (12) et une part de courant ($I_{NS-L}(i)$) s'ajoutant à cette part de courant lors du chargement du dispositif accumulateur d'énergie respectif (24), captent les parts de courant ($I_{NS-L}(i)$) absorbées pour le chargement du dispositif accumulateur d'énergie respectif pour une longueur croissante de l'itinéraire de réseau ou de l'itinéraire d'alimentation électrique entre la station de réseau respective (10) et la station d'alimentation (11).

15. Procédé selon l'une des revendications 12 à 14, **caractérisé en ce que** les stations de réseau (10) équipées à chaque fois d'un dispositif accumulateur d'énergie rechargeable (24) sont configurées de manière telle qu'une consommation de courant accrue d'au moins une station de réseau (10) en raison du chargement du dispositif accumulateur d'énergie respectif (24) est compensée au moins partiellement par la commutation du dispositif d'alimentation électrique (18) d'au moins une autre station de réseau (10) dans le deuxième état de fonctionnement.

Fig. 1

Fig. 2

EP 2 637 315 B1

100

11

$R_1 = \alpha_1 \cdot L_1$  30

$R_2 = \alpha_2 \cdot L_2$  30

$R_3 = \alpha_3 \cdot L_3$  30

$R_n = \alpha_n \cdot L_n$

$\downarrow I_{HS}(1)$   $\downarrow I_{HS}(2)$   $\downarrow I_{HS}(3)$   $\downarrow I_{HS}(n)$

$65 V_{\sim}$

10   10   10   ...   10

Fig. 3

$I_{NS}$

$I_{NS-B}$

$I_{NS-L}$

32

34

10

Fig. 4.

EP 2 637 315 B1

Fig. 5.

Fig. 6

EP 2 637 315 B1

SNMP manager

MANAGED DEVICE

TRANSPONDER

IP (SNMP)

PHOENIX

HFC (HMS)

MANAGED DEVICE

TRANSPONDER

MANAGED DEVICE

TRANSPONDER

Fig. 7

EP 2 637 315 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010016034 A1
- DE 102009052157 A1
- US 3987240 A